(19) Europäisches Patentamt
European Patent Office
Office européen des brevets

(11) Veröffentlichungsnummer: **0 054 230**
**B1**

(12) **EUROPÄISCHE PATENTSCHRIFT**

(45) Veröffentlichungstag der Patentschrift: **20.03.85**

(51) Int. Cl.⁴: **C 09 B 29/36**, C 09 B 27/00, C 09 B 45/00, G 03 C 5/54

(21) Anmeldenummer: **81110109.6**

(22) Anmeldetag: **03.12.81**

(54) **Monoazofarbstoffe und Verwendung als Bildfarbstoffe in farbfotografischen Aufzeichnungsmaterialien.**

(30) Priorität: **16.12.80 DE 3047305**
**18.04.81 DE 3115648**

(43) Veröffentlichungstag der Anmeldung: **23.06.82 Patentblatt 82/25**

(45) Bekanntmachung des Hinweises auf die Patenterteilung: **20.03.85 Patentblatt 85/12**

(84) Benannte Vertragsstaaten: **BE CH DE FR GB LI**

(56) Entgegenhaltungen: **GB - A - 1 528 801**

(73) Patentinhaber: **AGFA-GEVAERT Aktiengesellschaft, D-5090 Leverkusen 1 (DE)**

(72) Erfinder: **Runzheimer, Hans-Volker, Dr., In der Hildscheid 2, D-5068 Odenthal-Glöbusch (DE)**
Erfinder: **Wolfrum, Gerhard, Dr., Domblick 17, D-5090 Leverkusen 3 (DE)**
Erfinder: **Heidenreich, Holger, Dr., Andreas-Gryphius-Strasse 22, D-5000 Köln 80 (DE)**
Erfinder: **Bergthaller, Peter, Dr., Wolfskaul 1, D-5000 Köln 80 (DE)**
Erfinder: **Schenk, Günther, Dr., Rybnikerstrasse 6, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Gegenstand der vorliegenden Erfindung sind Monoazofarbstoffe der Formeln IV und V:

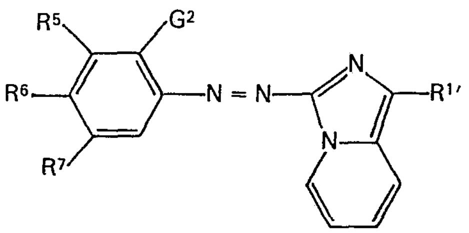

IV

bzw.

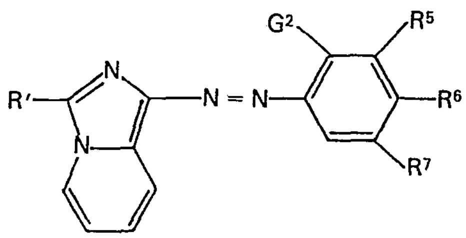

V

und deren Metallkomplexe, worin bedeuten
$G^2$ OH, COOH,
$R^5$ bis $R^7$ H, F, Cl, Br, Cyan, Nitro, COOH, Sulfo, $CF_3$, Acylamino, gegebenenfalls substituiertes Sulfamoyl oder Carbamoyl, oder zwei benachbarte Reste bedeuten zusammen einen ankondensierten Benzolring, und
R′, R1′ H, gegebenenfalls durch Halogen, Alkoxy oder Cyan substituiertes $C_1$–$C_4$-Alkyl oder gegebenenfalls substituiertes Phenyl.

Ein weiterer Gegenstand der Erfindung ist ein farbfotografisches Aufzeichnungsmaterial mit eingelagerten nicht diffundierenden farbgebenden Verbindungen (Farbabspalter), aus denen bei der Entwicklung Farbstoffe freigesetzt werden, die den gleichen Chromophor aufweisen wie die Farbstoffe der Formel IV.

Farbstoffe, die ebenfalls den gleichen Chromophor aufweisen, sind bereits bekannt aus GB-A 1 528 801, wo sie z.B. in Anspruch 4 als Zwischenprodukt erwähnt werden für die Herstellung entsprechender kationischer Farbstoffe, die den eigentlichen Gegenstand dieser Druckschrift darstellen. Von den als Zwischenprodukten erwähnten Farbstoffen unterscheiden sich die Farbstoffe der vorliegenden Erfindung dadurch, dass sie in der Phenylazogruppe in ortho-Stellung zur Azogruppe die zur Chelatbildung befähigte Gruppe -OH oder -COOH enthalten, wodurch sie befähigt sind, mit Metallionen stabile Farbstoff-Metall-Komplexe zu bilden.

Bevorzugte Farbstoffe entsprechen den Formeln

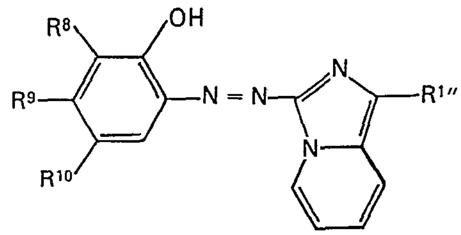

VI

bzw.

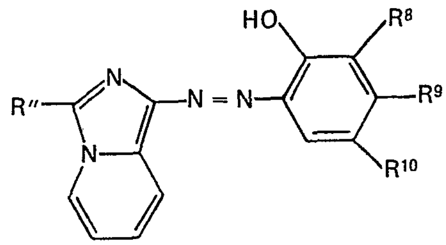

VII

worin bedeuten
R″ und R1″ $C_1$–$C_3$-Alkyl, gegebenenfalls durch $C_1$–$C_4$-Alkyl substituiertes Phenyl,
$R^8$ bis $R^{10}$ H, Cl, $NO_2$, CN, Sulfo, Acylamino, gegebenenfalls substituiertes Sulfamoyl, insbesondere durch $C_1$–$C_4$-Alkyl oder gegebenenfalls substituiertes Phenyl substituiertes Sulfamoyl, Carboxy, gegebenenfalls substituiertes Carbamoyl, insbesondere durch $C_1$–$C_4$-Alkyl oder gegebenenfalls substituiertes Phenyl substituiertes Carbamoyl.

Bevorzugt sind auch die Metallkomplexe der Farbstoffe der Formeln IV bis VII.

Die Herstellung der metallfreien Farbstoffe erfolgt in an sich bekannter Weise durch Kupplung der entsprechend substituierten diazotierten Aniline in wässrigem, organischem oder wässrig-organischem Medium im sauren bis alkalischen Bereich mit Kupplungskomponenten der Formel

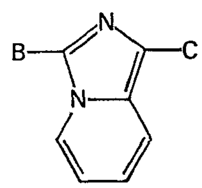

IX,

worin
B und C z.B. für H, Alkyl, Alkenyl, Cycloalkyl, Aralkyl, Aryl, Alkylthio, Arylthio, Mercapto, Alkylamino, Arylamino stehen,
mit der Massgabe, dass einer der Reste B und C für H steht.

Stehen B und C für H, erhält man Gemische von Farbstoffen der Formel IV und V.

Geeignete Diazokomponenten sind beispielsweise:
2-Aminophenol, 4-Chlor-2-aminophenol, 4,6-Dichlor-2-aminophenol, 3,4,6-Trichlor-2-aminophenol, 4-Nitro-2-aminophenol, 5-Nitro-2-aminophenol, 4,6-Dinitro-2-aminophenol, 4-Chlor-5-nitro-2-aminophenol, 4-Chlor-6-nitro-2-aminophenol, 6-Chlor-4-nitro-2-aminophenol, 6-Nitro-2-amino-4-acetylaminophenol, 3-Amino-4-hydroxytoluol, 5-Nitro-3-amino-4-hydroxy-toluol, 3-Amino-4-hydroxy-toluol-5-sulfonsäure, 2-Aminophenol-4-sulfonsäure, 2-Aminophenol-4-sulfonsäureamid, 2-Aminophenol-4-sulfonsäure-methylamid, 2-Aminophenol-4-sulfonsäure-dimethylamid, 2-Aminophenol-4-sulfonsäure-β-hydroxyethylamid, 2-Aminophenol-4-sulfonsäure-morpholid, 6-Chlor-2-aminophenol-4-sulfonsäure, 6-Chlor-2-aminophenol-4-sulfonsäureamid, 5-Nitro-2-aminophenol-4-sulfonsäure, 5-Nitro-2-aminophenol-4-sulfonsäureamid, 6-Nitro-2-aminophenol-4-sulfonsäure, 6-Nitro-2-aminophenol-4-sulfonsäureamid, 2-Aminophenol-5-sulfonsäure, 2-Aminophenol-5-sulfonsäureamid, 2-Aminophenol-5-sulfonsäure-dimethylamid, 2-Aminophenol-5-sulfonsäure-morpholid, 4-Chlor-2-aminophenol-5-sulfonsäure, 4-Chlor-2-aminophenol-5-sulfonsäureamid, 4-Nitro-2-aminophenol-5-sulfonsäure, 4-Nitro-2-aminophenol-5-sulfonsäureamid, 4-Chlor-2-aminophenol-6-sulfonsäure, 4-Chlor-2-aminophenol-6-sulfonsäureamid, 4-Nitro-2-aminophenol-6-sulfonsäure, 4-Nitro-2-aminophenol-6-sulfonsäureamid, 2-Amino-4-acetaminophenol-6-sulfonsäure, 2-Amino-4-acetaminophenol-6-sulfonsäureamid, 2-Aminophenol-4,6-disulfonsäure, 3-Amino-2-hydroxy-benzoesäure, 5-Nitro-3-amino-2-hydroxy-benzoesäure, 3-Amino-4-hydroxy-benzoesäure, 3-Amino-2-hydroxy-5-methyl-benzoesäure, 3-Amino-2-hydroxy-1-benzoesäure-5-sulfonsäure, (3-Amino-4-hydroxyphenyl)-ethyl-sulfon, 3-Amino-4-hydroxy-diphenylsulfon, 3-Amino-4-hydroxy-benzolmethylen-sulfon-(2)-ether-(1), 1-Amino-2-naphthol, 2-Amino-3-naphthol, 1-Amino-naphthol-(2)-sulfonsäure-(6), 2-Amino-naphthol-(1)-sulfonsäure-(4), 2-Amino-naphthol-(3)-sulfonsäure-(6), 2-Amino-3-naphthol-disulfonsäure-(6,8), 2-Amino-benzoesäure, 4-Chlor-2-amino-benzoesäure, 5-Chlor-2-amino-benzoesäure, 6-Chlor-2-amino-benzoesäure, 4-Nitro-2-amino-benzoesäure, 5-Nitro-2-amino-benzoesäure, 4-Acetylamino-2-amino-benzoesäure, 5-Acetylamino-2-amino-benzoesäure, 3,5-Dichlor-2-amino-benzoesäure, 2-Amino-benzoesäure-(1)-sulfonsäure-(4), 2-Amino-benzoesäure-(1)-sulfonsäure-(5), 2-Amino-5-{[(2-carboxyphenyl)-amino]-sulfonyl}-benzoesäure, 2-Amino-benzoesäure-(1)-sulfonsäure-(4)-amid, 2-Amino-naphthalin-3-carbonsäure, 2-Amino-naphthalin-3-carbonsäure-6-sulfonsäure, 1-Amino-anthrachinon-2-carbonsäure.

Geeignete Kupplungskomponenten IX sind beispielsweise:
Imidazo[1,5a]pyridin, 1-Methyl-imidazo[1,5a]pyridin, 1-Ethyl-imidazo[1,5a]pyridin, 1-Propyl-imidazo[1,5a]pyridin, 1-Isopropyl-imidazo[1,5a]pyridin, 1-Butyl-imidazo[1,5a]pyridin, 1-Isobutyl-imidazo[1,5a]pyridin, 1-Phenyl-imidazo[1,5a]pyridin, 1-(2-Tolyl)-imidazo[1,5a]pyridin, 1-(3-Tolyl)-imidazo[1,5a]pyridin, 1-(4-Tolyl)-imidazo[1,5a]pyridin, 1-(2,4-Dimethylphenyl)-imidazo[1,5a]pyridin, 1-(2,5-Dimethylphenyl)-imidazo[1,5a]pyridin, 1-Cyclohexyl-imidazo[1,5a]pyridin, 3-Methyl-imidazo[1,5a]pyridin, 3-Trifluormethyl-imidazo[1,5a]pyridin, 3-Chlormethyl-imidazo[1,5a]pyridin, 3-Dichlormethyl-imidazo[1,5a]pyridin, 3-Trichlormethyl-imidazo[1,5a]pyridin, 3-Ethyl-imidazo[1,5a]pyridin, 3-(1-Chlorethyl)-imidazo[1,5a]pyridin, 3-(2-Chlorethyl)-imidazo[1,5a]pyridin, 3-Propyl-imidazo[1,5a]pyridin, 3-(3-Chlorpropyl)-imidazo[1,5a]pyridin, 3-Isopropyl-imidazo[1,5a]pyridin, 3-Butyl-imidazo[1,5a]pyridin, 3-Isobutyl-imidazo[1,5a]pyridin, 3-Phenyl-imidazo[1,5a]pyridin, 3-(2-Chlorphenyl)-imidazo[1,5a]pyridin, 3-(3-Chlorphenyl)-imidazo[1,5a]pyridin, 3-(4-Chlorphenyl)-imidazo[1,5a]pyridin, 3-(2,4-Dichlorphenyl)-imidazo[1,5a]pyridin, 3-(2,5-Dichlorphenyl)-imidazo[1,5a]pyridin, 3-(3,4-Dichlorphenyl)-imidazo[1,5a]pyridin, 3-(2-Tolyl)-imidazo[1,5a]pyridin, 3-(3-Tolyl)-imidazo[1,5a]pyridin, 3-(4-Tolyl)-imidazo[1,5a]pyridin, 3-(3-Trifluormethylphenyl)-imidazo[1,5a]pyridin, 3-(4-t-Butylphenyl)-imidazo[1,5a]pyridin, 3-Phenylmethyl-imidazo[1,5a]pyridin, 3-Cyclohexyl-imidazo[1,5a]pyridin, 3-Phenylamino-imidazo[1,5a]pyridin, 3-Mercapto-imidazo[1,5a]pyridin, 3-Methylmercapto-imidazo[1,5a]pyridin, 3-Ethylthio-imidazo[1,5a]pyridin, 3-Phenylthio-imidazo[1,5a]pyridin.

Die Kupplungskomponenten IX können – soweit es sich nicht um bekannte Verbindungen handelt – nach literaturbekannten Verfahren hergestellt werden, z.B. wenn B = H aus 2-Pyridylketonen [vgl. JACS 50, 2484 (1928), JACS 68, 2400 (1946), JACS 70, 3702 (1948)] durch Umsetzung mit Hydroxylamin, Reduktion des erhaltenen Oxim-Isomerengemisches zu 2-Pyridylalkyl(aryl)methylamin, Formylierung der Aminogruppe und anschliessende Cyclisierung mittels Säuren oder Säurehalogeniden, oder wenn C = H beispielsweise durch Umsetzung von 2-Aminomethylpyridin [vgl. JACS 53, 4367, 1931; J. prakt. Chem. 140, 39, 1934, ibid. 146, 88, 1936, JACS 63, 490, 1941] entweder mit Säuren oder deren Derivaten zum Amid und anschliessende Cyclisierung mit Säuren oder Säurehalogeniden zu den Alkyl- oder Arylverbindungen IX oder durch Umsetzung mit Isocyanaten oder Thioisocyanaten zu den Harnstoffen bzw. Thioharnstoffen und Cyclisierung bei höherer Temperatur zu den entsprechenden Amino- oder Mercaptoverbindungen, die in bekannter Weise alkyliert oder aryliert werden können (vgl. J. Chem. Soc. 1955, 2834, J. org. Chem. 23, 1053, 1958, J. Chem. Soc. Perk. Trans. 1, 1973, 2595, Diss. Abst. B, 1968, 547, Lieb. Ann. Chem. 1976, 969, Angew. Chem. 75, 1101, 1963, J. Heterocycl. Chem. 16, 1349, 1979).

Farbstoffe der Formel IV mit $G^2$ = OH lassen sich auch in bekannter Weise durch Umsetzung von Hydrazinen der Formel

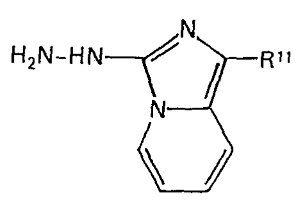

X,

worin
$R^{11}$ Wasserstoff, Alkyl, Cycloalkyl, Aralkyl, Alkylamino, Arylamino, Mercapto, Alkylthio, Arylthio mit o-Chinonen erhalten, beispielsweise solchen der Formel

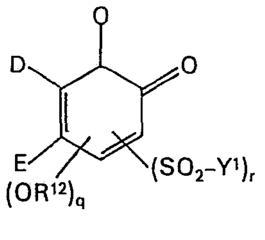

XI,

worin
D, E H, OH, CN, gegebenenfalls substituiertes Alkyl oder Alkoxy, Halogen oder zusammen Bestandteil eines ankondensierten carbocyclischen 6-Rings, der gegebenenfalls substituiert sein kann,
$R^{12}$ = H, gegebenenfalls substituiertes Alkyl, Aralkyl oder Aryl, insbesondere Phenyl,
$Y^1$ = OH, Alkoxy, Aryloxy, Halogen, Amino, gegebenenfalls mono- oder disubstituiert durch Alkyl oder Aryl.
q, r = 0, 1, 2,

Hydrazine der Formel X sind neu und lassen sich nach bekannten Methoden (vgl. Houben-Weyl, Methoden der organischen Chemie Band X,3) beispielsweise aus den entsprechenden Halogen- oder Mercaptoverbindungen durch Austausch mit Hydrazin herstellen.

Geeignete Hydrazine X, sind beispielsweise:
3-Hydrazino-imidazo[1,5a]pyridin, 3-Hydrazino-1-methyl-imidazo[1,5a]pyridin, 1-Ethyl-3-hydrazino-imidazo[1,5a]pyridin, 3-Hydrazino-1-propyl-imidazo[1,5a]pyridin, 3-Hydrazino-1-isopropyl-imidazo[1,5a]pyridin, 1-Butyl-3-Hydrazino-imidazo[1,5a]pyridin, 3-Hydrazino-1-isobutyl-imidazo[1,5a]pyridin, 3-Hydrazino-1-phenyl-imidazo[1,5a]pyridin, 3-Hydrazino-1-(2-tolyl)-imidazo[1,5a]pyridin, 3-Hydrazino-1-(3-tolyl)-imidazo[1,5a]pyridin, 3-Hydrazino-1-(4-tolyl)-imidazo[1,5a]pyridin, 1-(2,4-Dimethylphenyl)-3-hydrazino-imidazo[1,5a]pyridin, 1-(2,5-Dimethylphenyl)-3-hydrazino-imidazo[1,5a]pyridin, 1-Cyclohexyl-3-hydrazino-imidazo[1,5a]pyridin.

Geeignete Chinone XI sind beispielsweise:
4,5-Dimethoxy-1,2-benzochinon, 4-Methoxy-5-methyl-1,2-benzochinon, 4-Methoxy-1,2-naphthochinon, 4-Ethoxy-1,2-naphthochinon, 4-Isopropoxy-1,2-naphthochinon, 4-(1-Carboethoxy)-1,2-naphthochinon, 3-Sulfo-1,2-naphthochinon, 4-Sulfo-1,2-naphthochinon, 4-Phenylsulfon-1,2-naphthochinon, 7-Hydroxy-4-sulfo-1,2-naphthochinon, 7-Methoxy-4-sulfo-1,2-naphthochinon, 5-Sulfo-1,2-naphthochinon, 6-Sulfo-1,2-naphthochinon, 7-Sulfo-1,2-naphthochinon, 8-Sulfo-1,2-naphthochinon, 4,6-Disulfo-1,2-naphthochinon, 8-Hydroxy-3,6-disulfo-1,2-naphthochinon.

Durch Umsetzung mit metallabgebenden Substanzen, z.B. Co-, Cu-, Ni-, Zn- oder Mg-Salzen in an sich bekannter Weise, lassen sich die entsprechenden Metallkomplexe der Farbstoffe der Formeln IV und V erhalten. Diese stellen je nach Art des Metalls 1:1- oder 1:2-Komplexe dar. Die Umsetzung erfolgt dabei in wässrigem, wässrig-organischem oder organischem Medium im schwach sauren bis alkalischen Bereich bei gegebenenfalls erhöhter Temperatur.

Die metallhaltigen Farbstoffe eignen sich insbesondere zum Färben und Bedrucken von natürlichen und synthetischen amidgruppenhaltigen Materialien wie Wolle, Polyamid und Polyurethanen.

Die metallfreien Farbstoffe eignen sich insbesondere zum Färben von metallhaltigen Polyolefinen beispielsweise nickelmodifiziertem Polypropylen. Die Farbstoffe liefern dabei rotstichig gelbe bis grünstichig blaue oder grüne Färbungen mit guten Echtheiten.

Farbstoffe

Beispiel 1

14,4 g 4-Chlor-2-aminophenol werden in 25 ml 10%iger Natronlauge angeteigt, durch Zugabe von 150 ml Wasser völlig in Lösung gebracht und mit 70 ml einer 10%ige Natriumnitritlösung versetzt. Die filtrierte Lösung tropft man unter Rühren langsam (ca. 30 min) in eine Mischung aus 30 ml konzentrierter Salzsäure und 150 g Eis. Man diazotiert 1 h bei 0–5°C und zerstört den Nitritüberschuss durch Zugabe von Amidosulfonsäure. Zu der Diazotierung tropft man eine Lösung von 13,2 g 1-Methyl-imidazo[1,5a]pyridin, in 70 ml 10%iger Salzsäure. Durch Zusatz von ca. 100 ml gesättigter wässriger Natriumacetatlösung wird auf pH 4–5 abgestumpft. Der gebildete Farbstoff wird abgesaugt, gewaschen und getrocknet. Man erhält 21,7 g dünnschichtchromatographisch reinen Farbstoff der Formel

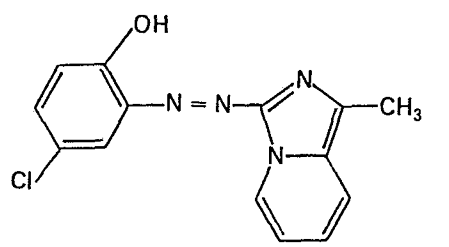

in Form eines braunen Pulvers, das nickelmodifizierte Polypropylenfasern in grünstichig blauen Tönen färbt.

An Stelle der freien 1-substituierten Imidazo[1,5a]pyridin-Base, kann mit gleichem Erfolg beispielsweise das gut wasserlösliche HCl-Doppelsalz dieser Verbindung als Kupplungskomponente eingesetzt werden.

Beispiel 2

23,4 g 6-Nitro-2-aminophenol-4-sulfonsäure werden unter Zusatz von 10 g Natriumhydroxid in 300 ml warmem Wasser gelöst (ca. pH 9). Nach Zugabe einer Lösung von 7,3 g Natriumnitrit in 25 ml Wasser, wird die filtrierte Lösung in eine

Mischung aus 40 ml konzentrierter Salzsäure und 200 g Eis gegossen und die Temperatur durch weiteren Eiszusatz (ca. 150 g) zwischen 0–2°C gehalten. Nach einer Stunde bei dieser Temperatur wird der Nitritüberschuss durch Zugabe von Amidosulfonsäure zerstört und eine Lösung von 11,8 g Imidazo[1,5a]pyridin in 25 ml 10% Salzsäure zugetropft. Durch Zugabe von ca. 150 ml gesättigter Natriumacetatlösung stumpft man auf pH 4–5 ab. Der ausgefallene Farbstoff wird abgesaugt, mit sehr wenig kalter gesättigter Kochsalzlösung gewaschen und bei 50–60°C getrocknet.

Man erhält 35 g schwarzes Farbstoffpulver, das nach dünnschichtchromatographischer Analyse (Kieselgel/basisches Laufmittel) aus einer blauen Haupt- und einer roten Nebenkomponente mit etwas geringerem $R_F$-Wert besteht. Nach säulenchromatographischer Auftrennung der Farbstoffmischung und NMR-spektroskopischer Analyse besteht die Hauptkomponente aus dem 3-Kupplungsprodukt (a) und die Nebenkomponente aus dem 1-Kupplungsprodukt (b). [Isomerenverhältnis (a):(b) ≈ 6:1].

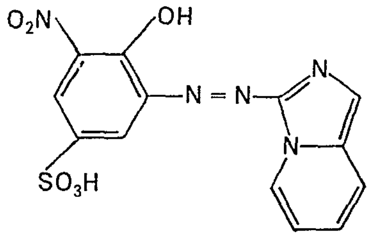

(a)

+

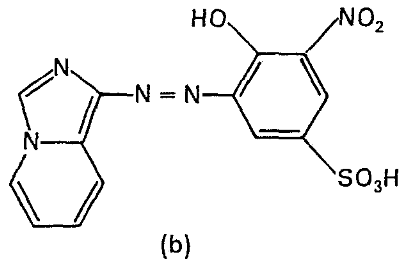

(b)

Verbindung (a) bildet einen grünstichig blauen, Verbindung (b) einen rotstichig blauen Nickelkomplex.

Beispiel 3

23,3 g 6-Nitro-2-aminophenol-4-sulfonsäureamid werden in 500 ml Ethanol in der Siedehitze durch kräftiges Rühren fein suspendiert, auf 0°C abgekühlt und weitere 15 min gerührt. Bei 0°C tropft man 18 g konzentrierte Schwefelsäure hinzu und versetzt ebenfalls bei 0°C mit 12,5 g Amylnitrit. Nach 45 min tropft man zu dieser Diazotierung eine Lösung von 13,2 g 1-Methyl-imidazo [1,5a]pyridin in 50 ml Ethanol und rührt 1 h nach. Durch Zugabe von ca. 150 ml gesättigter wässriger Natriumacetatlösung stumpft man auf pH 4–5 ab und verdünnt mit 2 l Wasser, um eine bessere Saugform des Farbstoffs zu erhalten. Das Produkt wird abgesaugt und mit wenig Wasser gewaschen. Man erhält 20,4 g dünnschichtchromatographisch reinen Farbstoff der Formel

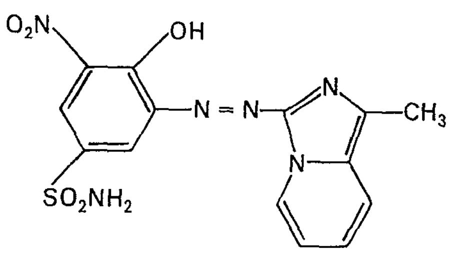

der nickelmodifiziertes Polypropylen in grünstichig blauen Tönen färbt.

Beispiel 4

Durch Kupplung von diazotiertem 4-Chlor-2-aminophenol auf 3-Methyl-imidazo[1,5a]pyridin nach Beispiel 1 erhält man den Farbstoff der Formel

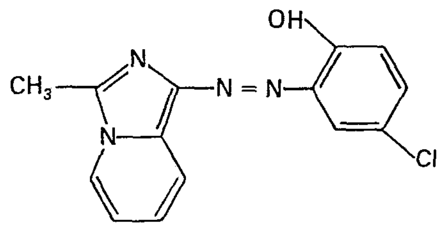

der nickelmodifiziertes Polypropylen in rotstichig blauen Tönen färbt.

Nach Beispiel 1, 2 oder 3 können auch alle anderen in Tabelle 1–4 aufgeführten Farbstoffe hergestellt werden.

Beispiel 5

23,8 g 1,2-Naphthochinon-4-sulfonsäure und 14,8 g 3-Hydrazino-imidazo[1,5a]pyridin werden in 500 ml 1n Salzsäure 2 Stunden bei Raumtemperatur gerührt. Durch Aussalzen mit Natriumchlorid erhält man in guter Ausbeute die Verbindung der Formel

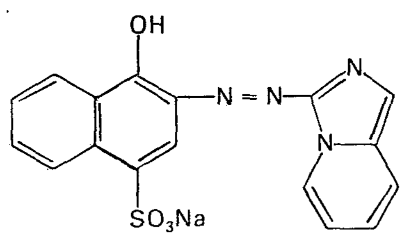

die nickelmodifiziertes Polypropylen in sehr stark grünstichig blauen Tönen färbt.

Metallkomplexe der Farbstoffe

Beispiel 6

14,4 g des Farbstoffes aus Beispiel 1 werden in ca. 50 ml Wasser angerührt, mit 13,3 g Nickel(II)sulfat-tetrahydrat und 13 g einer konzen-

trierten Ammoniaklösung versetzt, auf 90°C erhitzt und 1 h bei dieser Temperatur gehalten. Nach dem Abkühlen wird der ausgefallene Nikkelkomplex abgesaugt, gewaschen und getrocknet. Man erhält 16 g Farbstoffpulver. Der Nickelkomplex färbt Wolle und Polyamid in grünstichig blauen Tönen.

Auf die gleiche Weise können auch die Kobalt- und Kupferkomplexe des Farbstoffes aus Beispiel 1 erhalten werden.

Alle erfindungsgemässen Farbstoffe lassen sich analog Beispiel 6 in die jeweiligen Metallkomplexe überführen. In vielen Fällen erfolgt die quantitative Metallisierung bereits durch Umsetzung bei Raumtemperatur.

Färbebeispiele

Färbung von Polyamid mit sulfongruppenfreien und sulfogruppenhaltigen Metallkomplexfarbstoffen der Formel I:

In einem Färbebecher von 500 ml Inhalt wird eine Färbeflotte vorbereitet, indem man 0,15 g sekundäres Ammoniumphosphat und 0,1 g Metallkomplexfarbstoff jeweils in enthärtetem Wasser löst, mit enthärtetem Wasser auf insgesamt 250 ml auffüllt und in ein beheiztes Bad stellt. Nun setzt man der Färbeflotte 5 g Polyamidstücke zu, heizt innerhalb 45 min. auf 98°C (Kochtemperatur) auf und färbt 30 min. bei dieser Temperatur. Anschliessend kühlt man das Färbebad auf 80°C ab, setzt 0,15 g 30%ige Essigsäure zu, heizt wieder auf 98°C auf und färbt weitere 30 min. bei dieser Temperatur. Der gesamte Färbevorgang vollzieht sich unter ständigem Umziehen des Materials. Das gefärbte Material wird der Flotte entnommen und mit kaltem enthärtetem Wasser gespült und bei 60–70°C getrocknet.

Färbung von nickelmodifiziertem Polypropylenmaterial nach der Carier-Methode bei Kochtemperatur mit metallfreien Farbstoffen der Formel I:

In einem Färbebecher von 500 ml Inhalt wird eine Färbeflotte verbreitet, indem man 0,5 Tetranatriumsalz der Ethylendiamintetraessigsäure, 0,75 g einer Oleylpolyglykolether-Zubereitung, 0,5 g eines selbstemulgierenden aromatischen Carbonsäureester und 5 g 30%ige Essigsäure in 200 ml enthärtetem Wasser löst und auf 45–50°C erwärmt. Man löst 0,1 g Farbstoff in 5 ml Dimethylformamid, gibt 0,5 g eines Kondensationsproduktes aromatischer Sulfonsäuren (anionaktiv) hinzu und füllt mit enthärtetem Wasser auf 50 ml auf. Die sorgfältig dispergierte Farbstofflösung gibt man zu der Färbeflotte und trägt anschliessend 5 g nickelmodifizierte Polypropylenstücke ein. Nun bringt man das Färbebad auf 80°C. Während weiteren 20 min. steigert man die Temperatur auf 98°C (Kochtemperatur). Nach 20 min. Kochzeit setzt man 5 g 30%ige Essigsäure hinzu und färbt weitere 40 min. bei Kochtemperatur. Der gesamte Färbevorgang vollzieht sich unter ständigem Umziehen des Materials. Das gefärbte Material wird der Flotte entnommen, zunächst mit heissem und dann mit kaltem Wasser gespült und bei 60–70°C im Trockenschrank getrocknet.

Bei Färbung von Polyamid oder Wolle mit den Ni-, Co- oder Cu-Komplexen bzw. von Nickel-Polypropylen mit den metallfreien Farbstoffen, erhält man Färbungen in den in Spalte A, B und C der Tabellen 1–4 angegebenen Farbtönen.

Tabelle 1

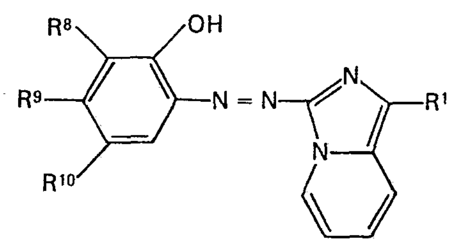

| Beispiel | $R^8$ | $R^9$ | $R^{10}$ | $R^{1''}$ | A Ni | B Co | C Cu |
|---|---|---|---|---|---|---|---|
| 7 | H | H | H | $CH_3$ | blau | rotst. blau | blaugrün |
| 8 | H | H | Cl | $C_6H_5$ | grün | blaugrün | grün |
| 9 | H | H | $NO_2$ | $C_6H_5$ | grün | blaugrün | grün |
| 10 | H | $NO_2$ | H | $C_6H_5$ | blaugrün | blau | blaugrün |
| 11 | H | $NO_2$ | Cl | H | blaugrün | blaugrün | blaugrün |
| 12 | H | $NO_2$ | Cl | $C_6H_5$ | blaugrün | blaugrün | blaugrün |
| 13 | Cl | H | Cl | $C_6H_5$ | blaugrün | blaugrün | grün |
| 14 | $NO_2$ | H | $NO_2$ | $C_6H_5$ | blaugrün | blau | blaugrün |
| 15 | $NO_2$ | H | Cl | $CH_3$ | grün | blaugrün | grün |
| 16 | Cl | H | $NO_2$ | $CH_3$ | blaugrün | blau | grün |
| 17 | $NO_2$ | H | $NHCOCH_3$ | $CH_3$ | blau | blau | blaugrün |
| 18 | H | H | $CH_3$ | $CH_3$ | blau | rotst. blau | blaugrün |
| 19 | H | $SO_2NH_2$ | H | $CH_3$ | blaugrün | blau | blaugrün |
| 20 | H | H | $SO_2NH_2$ | $CH_3$ | blau | rotst. blau | blau |
| 21 | $SO_2NH_2$ | H | Cl | H | blaugrün | blau | grün |

Tabelle 1 (Fortsetzung)

| Beispiel | $R^8$ | $R^9$ | $R^{10}$ | $R^{1''}$ | A Ni | B Co | C Cu |
|---|---|---|---|---|---|---|---|
| 22 | $SO_2NH_2$ | H | Cl | $CH_3$ | blaugrün | blau | blaugrün |
| 23 | $SO_2NH_2$ | H | Cl | $C_2H_5$ | blaugrün | blau | blaugrün |
| 24 | $SO_2NH_2$ | H | Cl | $n-C_3H_7$ | blaugrün | rotst. blau | blaugrün |
| 25 | $SO_2NH_2$ | H | Cl | $i-C_3H_7$ | blaugrün | blau | blaugrün |
| 26 | $SO_2NH_2$ | H | Cl | $C_6H_5$ | blaugrün | blau | blaugrün |
| 27 | $SO_3H$ | H | Cl | $C_6H_5$ | blaugrün | blau | blaugrün |
| 28 | Cl | H | $SO_2NH_2$ | H | blaugrün | blau | blaugrün |
| 29 | Cl | H | $SO_2NH_2$ | $CH_3$ | blaugrün | blau | blaugrün |
| 30 | Cl | H | $SO_2NH_2$ | $C_2H_5$ | blaugrün | blau | blaugrün |
| 31 | Cl | H | $SO_2NH_2$ | $n-C_3H_7$ | blaugrün | blau | blaugrün |
| 32 | Cl | H | $SO_2NH_2$ | $i-C_3H_7$ | blaugrün | blau | blaugrün |
| 33 | Cl | H | $SO_2NH_2$ | $C_6H_5$ | blaugrün | blau | blaugrün |
| 34 | $NO_2$ | H | $SO_2NH_2$ | H | blaugrün | blau | blaugrün |
| 35 | $NO_2$ | H | $SO_2NH_2$ | $CH_3$ | blaugrün | blau | blaugrün |
| 36 | $NO_2$ | H | $SO_2NH_2$ | $C_2H_5$ | blaugrün | blau | blaugrün |
| 37 | $NO_2$ | H | $SO_2NH_2$ | $C_6H_5$ | blaugrün | blau | blaugrün |
| 38 | $NO_2$ | H | $SO_3H$ | $n-C_3H_7$ | blaugrün | blau | blaugrün |
| 39 | $NO_2$ | H | $SO_3H$ | $C_6H_5$ | blaugrün | blau | blaugrün |
| 40 | H | $SO_2NH_2$ | Cl | H | blaugrün | blau | blaugrün |
| 41 | H | $SO_2NH_2$ | Cl | $CH_3$ | grün | blau | grün |
| 42 | H | $SO_2NH_2$ | Cl | $C_2H_5$ | grün | blau | grün |
| 43 | H | $SO_2NH_2$ | $NO_2$ | H | blaugrün | blau | blaugrün |
| 44 | H | $SO_2NH_2$ | $NO_2$ | $CH_3$ | blaugrün | blaugrün | grün |
| 45 | H | $SO_2NH_2$ | $NO_2$ | $C_2H_5$ | grün | blaugrün | grün |
| 46 | H | $SO_2NH_2$ | $NO_2$ | $C_6H_5$ | grün | blaugrün | grün |
| 47 | H | $NO_2$ | $SO_3H$ | $CH_3$ | blau | blau | blaugrün |
| 48 | H | $NO_2$ | $SO_2NH_2$ | $CH_3$ | blau | blau | blaugrün |
| 49 | H | $SO_3H$ | Cl | $CH_3$ | grün | blau | grün |
| 50 | H | $SO_3H$ | $NO_2$ | $CH_3$ | grün | blau | grün |
| 51 | $SO_3H$ | H | $NO_2$ | $CH_3$ | grün | blau | blaugrün |
| 52 | $SO_3H$ | H | $NO_2$ | $C_2H_5$ | grün | blau | blaugrün |
| 53 | $SO_3H$ | H | $NO_2$ | $C_6H_5$ | blaugrün | blau | blaugrün |
| 54 | $SO_2NH_2$ | H | $NO_2$ | $CH_3$ | blaugrün | blau | blaugrün |
| 55 | $SO_2NH_2$ | H | $NO_2$ | $i-C_3H_7$ | blaugrün | blau | blaugrün |
| 56 | Cl | H | $SO_3H$ | $CH_3$ | blaugrün | blau | blaugrün |
| 57 | $SO_3H$ | H | $NHCOCH_3$ | $CH_3$ | grün | blaugrün | blaugrün |
| 58 | $SO_3H$ | H | $CH_3$ | $CH_3$ | blaugrün | blau | blaugrün |
| 59 | $SO_3H$ | H | $SO_3H$ | $CH_3$ | blaugrün | blau | blaugrün |
| 60 | COOH | H | H | $CH_3$ | rotst. blau | stark rotst. blau | blau |
| 61 | COOH | H | $NO_2$ | $CH_3$ | blau | rotst. blau | violett |
| 62 | H | H | COOH | $CH_3$ | blaugrün | blaugrün | blau |
| 63 | COOH | H | $SO_3H$ | $CH_3$ | blau | rotst. blau | blau |

Tabelle 2

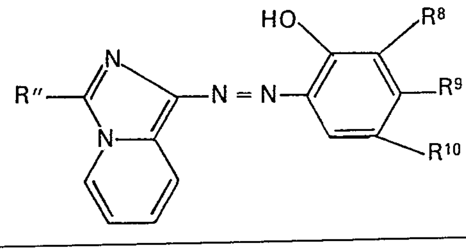

| Beispiel | $R^8$ | $R^9$ | $R^{10}$ | $R''$ | A Ni | B Co | C Cu |
|---|---|---|---|---|---|---|---|
| 64 | H | H | H | $CH_3$ | rotst. blau | blau | rotst. blau |
| 65 | H | H | H | $C_6H_5$ | rotst. blau | blau | rotst. blau |
| 66 | $NO_2$ | H | $SO_3H$ | $CH_3$ | rotst. blau | blau | rotst. blau |

Tabelle 2 (Fortsetzung)

| Bei-spiel | $R^8$ | $R^9$ | $R^{10}$ | $R''$ | A Ni | B Co | C Cu |
|---|---|---|---|---|---|---|---|
| 67 | $NO_2$ | H | $SO_3H$ | $C_6H_5$ | rotst. blau | blau | rotst. blau |
| 68 | $NO_2$ | H | $SO_2NH_2$ | $CH_3$ | violett | rotst. blau | blau |
| 69 | $SO_3H$ | H | Cl | $SCH_3$ | blau | rotst. blau | blau |
| 70 | $SO_2NH_2$ | H | Cl | $CH_3$ | violett | rotst. blau | blau |
| 71 | H | $SO_2NH_2$ | Cl | $CH_3$ | blaugrau | rotst. blau | blau |
| 72 | H | $SO_2NH_2$ | $NO_2$ | $CH_3$ | violett | rotst. blau | blau |
| 73 | Cl | H | $SO_3H$ | $C_6H_5$ | rotst. blau | rotbraun | rotbraun |
| 74 | Cl | H | $SO_3H$ | $NHC_6H_5$ | blau | rotst. braun | rotst. braun |
| 75 | H | H | $SO_2NH_2$ | SH | rotst. blau | blaugrau | blaugrün |
| 76 | H | H | $SO_2NH_2$ | $SCH_3$ | purpur | blau | rotst. blau |
| 77 | H | $SO_2NH_2$ | H | $SCH_3$ | violett | rotst. blau | blau |
| 78 | H | $SO_2NH_2$ | H | $C_6H_5$ | rotst. blau | rotst. blau | blaugrün |
| 79 | H | H | $SO_2NH_2$ | $C_6H_5$ | purpur | stark rotst. blau | blau |
| 80 | H | $SO_3H$ | Cl | $C_6H_5$ | rotst. blau | rotst. blau | blau |
| 81 | H | $SO_3H$ | $NO_2$ | $CH_3$ | rotst. blau | rotst. blau | blau |
| 82 | H | $SO_2NH_2$ | H | $NHC_6H_5$ | blau | rotst. braun | rotst. braun |
| 83 | $SO_3H$ | H | $NO_2$ | $NHC_6H_5$ | rotst. blau | lila | violett |
| 84 | $SO_3H$ | H | $NO_2$ | $C_6H_5$ | lila | blaust. violett | violett |

Tabelle 3

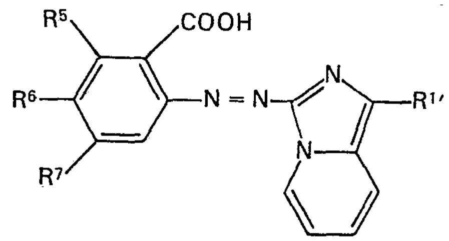

| Bei-spiel | $R^5$ | $R^6$ | $R^7$ | $R^{1'}$ | A Ni | B Co | C Cu |
|---|---|---|---|---|---|---|---|
| 85 | H | H | H | $C_6H_5$ | violett | rotst. blau | violett |
| 86 | Cl | H | H | $CH_3$ | purpur | purpur | violett |
| 87 | H | Cl | H | $CH_3$ | violett | rotst. blau | rotst. blau |
| 88 | H | $NO_2$ | H | $CH_3$ | rotst. blau | rotst. blau | rotst. blau |
| 89 | H | $NO_2$ | H | $C_2H_5$ | rotst. blau | rotst. blau | rotst. blau |
| 90 | H | H | $NHCOCH_3$ | $CH_3$ | blau | rotviolett | stark rotst. blau |
| 91 | H | $NHCOCH_3$ | H | $CH_3$ | stark rotst. blau | rotst. blau | rotst. blau |
| 92 | H | H | $SO_2NH_2$ | $CH_3$ | violett | violett | rotst. blau |
| 93 | H | $SO_3H$ | H | $CH_3$ | purpur | purpur | blau |

Tabelle 4

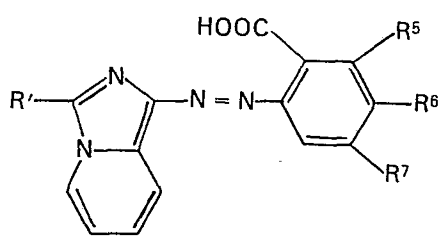

| Bei-spiel | $R^5$ | $R^6$ | $R^7$ | $R'$ | A Ni | B Co | C Cu |
|---|---|---|---|---|---|---|---|
| 94 | H | H | H | $C_6H_5$ | orange | rotbraun | rotbraun |
| 95 | Cl | H | H | $CH_3$ | orange | rotst. braun | rotbraun |

Tabelle 4 (Fortsetzung)

| Bei-spiel | $R^5$ | $R^6$ | $R^7$ | R' | A Ni | B Co | C Cu |
|---|---|---|---|---|---|---|---|
| 96 | H | Cl | H | $CH_3$ | orange | rotst. braun | blaust. rot |
| 97 | H | $NO_2$ | H | $C_6H_5$ | rotbraun | rotbraun | rotbraun |
| 98 | H | $NO_2$ | H | $NHC_6H_5$ | rotbraun | rotbraun | rotbraun |
| 99 | H | H | $NHCOCH_3$ | $C_2H_5$ | rotst. gelb | rotst. gelb | blaust. rot |
| 100 | H | $NHCOCH_3$ | H | $CH_3$ | rotst. gelb | rotst. gelb | stark rotst. gelb |
| 101 | H | H | $SO_2NH_2$ | $C_6H_5$ | orange | rotbraun | purpur |
| 102 | H | $SO_3H$ | H | $C_2H_5$ | rotorange | rot | kirschrot |

Wie bereits erwähnt betrifft die Erfindung des weiteren ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger komplexierbarer Azofarbstoff freigesetzt wird.

Das Farbdiffusionsübertragungsverfahren beruht darauf, dass bei der Entwicklung in einem lichtempfindlichen Element nach Massgabe einer vorangegangenen Belichtung eine bildmässige Verteilung diffusionsfähiger Farbstoffe erzeugt und auf ein Bildempfangselement übertragen wird. In einigen Fällen lässt sich die Lichtechtheit der nach einem solchen Verfahren erzeugten Farbbilder in bekannter Weise dadurch verbessern, dass durch Metallionen komplexierbare Farbstoffe, z.B. Tridentat-azofarbstoffe verwendet werden, die durch nachträgliche Behandlung mit geeigneten Metallionen stabile Farbstoff-Metall-Komplexe bilden. Der Verbesserung der Lichtechtheit von Azofarbstoffbildern, die nach dem Farbdiffusionsübertragungsverfahren oder nach einem anderen fotografischen Verfahren, etwa nach dem Silberfarbbleichverfahren erhalten worden sind, durch Komplexierung mit Metallionen ist beispielsweise bekannt aus DE-AS 1 116 532 oder DE-AS 1 125 279.

In DE-OS 2 740 719 sind nicht diffundierende farbgebende Verbindungen (Farbabspalter) beschrieben, die bei der Entwicklung diffusionsfähige metallisierbare Azofarbstoffe der Formel XII freisetzen,

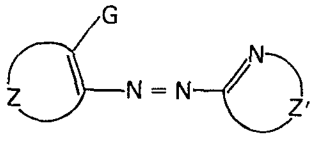

XII

worin bedeuten

Z die zur Vervollständigung eines aromatischen, carbocyclischen oder heterocyclischen Kernes mit mindestens einem Ring mit 5 bis 7 Atomen erforderlichen Atome;

Z' die zur Vervollständigung eines heterocyclischen Ringes erforderlichen Atome; und

G eine zur Ausbildung eines Metallchelates befähigte Gruppe.

Falls bei derartigen Farbstoffen Z' einen 2-Amino-3-hydroxypyridinrest oder einen über die 1-Stellung verknüpften 4-Hydroxyisochinolinrest vervollständigen, weisen die damit nach Metallisierung durch Nickel- oder Kupferionen erhaltenen Metallkomplex-Bildfarbstoffe einen stumpfen Farbton auf, der mit demjenigen der bekannten blaugrünen Bildfarbstoffe etwa der Phthalocyaninfarbstoffe oder der 4-(4-Nitrophenylazo)-1-naphtholfarbstoffe in keiner Weise vergleichbar ist. Der damit verbundene Qualitätsverlust macht den Vorteil der raschen Diffusion oder der höheren Lichtbeständigkeit zunichte und steht einer technischen Verwendung hemmend im Weg. Noch mehr gilt der Nachteil der ungünstigen Absorption für die gleichfalls in DE-OS 2 740 719 sowie in US 4 147 544 und US 4 165 238 genannten 2-(5-Nitro-2-pyridylazo)-1-naphthole und die in US 4 204 870 und US 4 207 104 genannten 2-(5'-Sulfamoyl-2-pyridylazo)-4-alkoxy-1-naphthole und 2-(Benzothiazolylazo)-1-naphthole, die sich durch hohe Nebendichten im Wellenlängenbereich des blauen Lichtes als sogenannte «unechte» Blaugrünfarbstoffe erweisen.

Der Erfindung liegt die Aufgabe zugrunde, nachmetallisierbare Monoazofarbstoffe mit guter Diffusionsfähigkeit zu finden, die sich durch besonders klare blaugrüne Farbtöne der aus ihnen erhaltenen Nickel- oder Kupferkomplexe sowie durch gute Lichtechtheit auszeichnen.

Es wurde gefunden, dass diese Aufgabe durch eine besondere Ausgestaltung des in der DE-OS 2 740 719 als vorteilhaft angegebenen Chromophors XIII

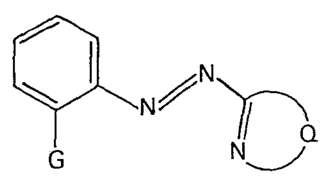

XIII

gelöst werden kann, bei der durch Q die fehlenden Bestandteile eines Imidazo[1,5a]pyridinringes dargestellt werden.

Einer der Gegenstände der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält,

aus der unter den Bedingungen der alkalischen Entwicklung als Funktion der Entwicklung der Silberhalogenidemulsionsschicht ein diffusionsfähiger durch Metallionen komplexierbarer Azofarbstoff freigesetzt wird, dadurch gekennzeichnet, dass der Azofarbstoff der folgenden Formel XIV entspricht:

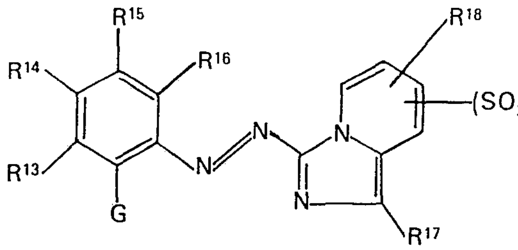

XIV,

worin bedeuten

$R^{13}$, $R^{14}$, $R^{15}$ und $R^{16}$ gleich oder verschieden und zwar -H, -F, -Cl, -Br, -CN, $-NO_2$, $-CF_3$, $-OCF_3$, $-SCF_3$, -Alkyl, Alkoxy, Alkylthio, Acylamino, Alkylsulfonyl, Arylsulfonyl, -CO-X oder $-SO_2Y$; oder zwei zueinander benachbarte Reste aus der Gruppe der Reste $R^{13}$–$R^{16}$ bedeuten gemeinsam einen ankondensierten Benzolring, der gegebenenfalls weitere Substituenten tragen kann, insbesondere Halogen, $-NO_2$ oder $-SO_2-Y$;

$R^{17}$ Wasserstoff oder einen Substituenten mit Elektronendonorcharakter;

$R^{18}$ Wasserstoff, Halogen, z.B. Chlor oder Brom, oder Alkyl;

G eine zur Chelatbildung befähigte Gruppe;

X -OH, Alkoxy, eine gegebenenfalls durch Alkyl oder Aryl substituierte Aminogruppe oder eine cyclische Aminogruppe

Y -H, -OH, eine gegebenenfalls durch Alkyl oder Aryl substituierte Aminogruppe, eine cyclische Aminogruppe, oder eine Gruppe der Formel $-NH-SO_2-R^{19}$;

$R^{19}$ Alkyl, Aryl, eine gegebenenfalls zweifach durch Alkyl substituierte Aminogruppe oder eine cyclische Aminogruppe;

n 0 oder 1.

Bei der zur Chelatbildung befähigten Gruppe G handelt es sich um eine Gruppe, die in Gegenwart von Metallionen aktiv an der Bildung eines Azofarbstoff(tridentat)-Metall-Komplexes teilnimmt, oder um eine Gruppe, die sich unter den Bedingungen der alkalischen Entwicklung, z.B. durch Hydrolyse, in eine derartige Gruppe umwandeln lässt. Diese Gruppen sind mit ihrem chelatbildenden Zentrum bevorzugt unmittelbar an den sie tragenden Benzolring gebunden. Beispiele für geeignete zur Chelatbildung befähigte Gruppen sind die gegebenenfalls in acylierter und durch Alkali freisetzbarer Form vorliegenden Gruppen

$-OH$ und $-NH-SO_2-R^{20}$

wobei $R^{20}$ einen der für $R^{19}$ definierten Reste bedeutet.

Als Beispiele für die durch $R^{17}$ dargestellte Gruppe mit Elektronendonorcharakter sind zu nennen:

Alkyl, Alkenyl, z.B. Allyl, Aralkyl, Cycloalkyl, Aryl (z.B. eine durch $-SO_2-Y$ substituierte Phenylgruppe), Alkoxy, Aralkoxy, Aroxy, Alkylthio, Arylthio, eine gegebenenfalls durch Alkyl, Aryl oder Acyl substituierte Aminogruppe und eine cyclische Aminogruppe.

Die in den in den Definitionen $R^{13}$ bis $R^{19}$ genannten Resten vorhandenen Alkylgruppen enthalten vorzugsweise nicht mehr als 4 C-Atome; bevorzugte Beispiele sind Methyl, Ethyl, n-Propyl, Isopropyl, n-Butyl.

Die in den Definitionen $R^{13}$ bis $R^{17}$ und $R^{19}$ genannten Arylgruppen sind vorzugsweise Phenylgruppen; sie können weiter substituiert sein, z.B. durch Alkyl, Alkoxy, Acylamino, Sulfamoyl, Sulfinat, jedoch umfassen sie einschliesslich solcher Substituenten vorzugsweise nicht mehr als 8 C-Atome.

Bei den erwähnten cyclischen Aminogruppen handelt es sich um 5- bis 7gliedrige cyclische Aminogruppen, z.B. die Pyrrolidin-, Piperidin- oder Morpholingruppe.

Acylreste (Acylamino) leiten sich allgemein ab von aliphatischen oder aromatischen Carbon- oder Sulfonsäuren, von Carbaminsäuren oder Sulfaminsäuren oder von Kohlensäurehalbestern. Hydrolysierbare Acylreste in der zur Chelatbildung befähigten Gruppe G sind insbesondere von aliphatischen Carbonsäuren oder Kohlensäurehalbestern abgeleitet.

Weiterhin verfügen die Farbstoffe der Formel XIV, z.B. in Form einiger der bereits bei $R^{13}$–$R^{20}$ erwähnten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit den zuvor genannten das Diffusions- und Beizverhalten modifizierenden Gruppen. Die erwähnte funktionelle Gruppe kann beispielsweise an einen Alkyl- oder Arylrest gebunden sein, der seinerseits Bestandteil eines der unter $R^{13}$–$R^{20}$ erwähnten Substituenten ist.

Die aus den erfindungsgemässen Farbstoffen der Formel XIV erzeugten Nickel- und Kupferkomplexe stellen klare und farbstarke Blaugrünfarbstoffe dar, die auch auf kationischen Beizmitteln ein gutes Lichtechtheitsverhalten zeigen.

Den erfindungsgemässen Farbstoffen der Formel XIV ist eigen, dass die Absorptionsspektren der Farbstoffe gegenüber denen der Komplexe nach kürzeren Wellenlängen verschoben sind. Eine alkalilabile Blockierung der chelatbildenden Gruppe G durch Acylgruppen oder verwandte Schutzgruppen ist dazu nicht erforderlich, doch

führt die Acylierung zu einer weiteren Verschiebung der Absorption des Chromophors nach kürzeren Wellenlängen. Zusätzlich reduziert sie im allgemeinen die Farbstärke, so dass die Absorption der Schicht mit der eingelagerten nicht diffundierenden farbgebenden Verbindung die Sensibilisierung der zugeordneten Silberhalogenidemulsionsschicht nicht durch einen Filtereffekt stört.

Die Formel XIV bezieht sich auf die erfindungsgemässen bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäss Formel XIV an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel XIV an den Trägerrest kann beispielsweise über einen der Substituenten $R^{13}$–$R^{18}$, über $SO_2$–Y oder über die zur Chelatbildung befähigte Gruppe G erfolgen. Die erfindungsgemässen Farbabspalter lassen sich dementsprechend durch die folgende Formel XV darstellen

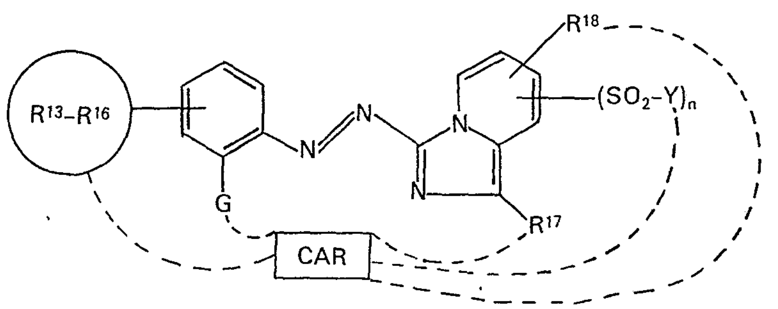

XV,

worin
$R^{13}$–$R^{18}$, $-SO_2$–Y, n und G die bereits angegebene Bedeutung haben,
CAR einen mindestens eine diffusionsfestmachende Gruppe enthaltenden Trägerrest bedeutet,

und die gestrichelten Linien mögliche Verknüpfungsstellen kennzeichnen. In den erfindungsgemässen Farbabspaltern der Formel XV ist somit der Trägerrest als Substituent in einer der durch $R^{13}$–$R^{18}$, $-SO_2$–Y und G dargestellten Gruppen enthalten.

Der durch CAR dargestellte Trägerrest weist ausser der diffusionsfestmachenden Gruppe mindestens eine Gruppierung auf, die als Funktion der Entwicklung einer Silberhalogenidemulsionsschicht spaltbar ist, so dass der an den Trägerrest gebundene Farbstoff gegebenenfalls zusammen mit einem kleinen Bruchstück des ursprünglichen Trägerrestes von der diffusionsfestmachenden Gruppe abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemässen Farbabspaltern kann es sich beispielsweise um nichtdiffundierende Farbkuppler handeln, die in der Kupplungsstelle einen Farbstoffrest gemäss der vorliegenden Erfindung tragen und diesen als Folge einer chromogenen Kupplung in Freiheit setzen. Derartige Abspaltmechanismen sind beispielsweise in DE-PS 1 095 115 und in US 3 227 550 beschrieben.

Als besonders vorteilhaft erweisen sich jedoch redoxaktive Farbabspalter der Formel

BALLAST - REDOX - FARBSTOFF,

worin bedeuten
BALLAST eine diffusionsfestmachende Gruppe
REDOX eine Gruppe, die unter den Bedingungen der alkalischen Entwicklung oxidierbar oder reduzierbar ist und jenachdem, ob sie im oxidierten oder im reduzierten Zustand vorliegt, in unterschiedlichem Ausmass einer Eliminierungsreaktion, einer nukleophilen Verdrängungsreaktion oder einer Hydrolyse unterliegt mit der Folge, dass der Rest FARBSTOFF abgespalten wird
FARBSTOFF der Rest eines diffusionsfähigen Farbstoffes, im vorliegenden Fall eines Farbstoffes gemäss Formel XIV.

Als diffusionsfestmachende Reste sind solche Reste anzusehen, die es ermöglichen, die erfindungsgemässen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden:
-NHCO-, $-NHSO_2-$, -NR-, wobei R Wasserstoff oder Alkyl bedeutet, -O- oder -S-. Zusätzlich kann der diffusionsfestmachende Rest auch wasserlöslichmachende Gruppen enthalten, wie z.B. Sulfogruppen oder Carboxylgruppen, die auch in anionischer Form vorliegen können. Da die Diffusionseigenschaften von der Molekülgrösse der verwendeten Gesamtverbindung abhängen, genügt es in bestimmten Fällen, z.B., wenn das verwendete Gesamtmolekül gross genug ist, als

«diffusionsfestmachende Reste» auch kürzerkettige Reste zu verwenden.

Redoxaktive Trägerreste der Struktur BALLAST-REDOX- und entsprechende Farbabspalter sind in den verschiedensten Ausführungsformen bekannt.

Oxidierbare Farbabspalter, die nach Oxidation einer Hydrolyse unterliegen unter Freisetzung eines diffusionsfähigen Farbstoffes, sind beispielsweise beschrieben in: DE-OS 2 242 762, DE-OS 2 406 664, DE-OS 2 505 246, DE-OS 2 613 005, DE-OS 2 645 656 und folgenden Research Disclosure Publikationen: Nr. 15 157 (November 1976), Nr. 15 654 (April 1977), Nr. 17 736 (Januar 1979). Hierbei handelt es sich überwiegend um Verbindungen, in denen ein Farbstoffrest über eine Sulfonamidgruppe an einen oxidierbaren Trägerrest gebunden ist; der bei der Entwicklung freigesetzte Farbstoff weist dementsprechend eine Sulfamoylgruppe auf.

Oxidierbare Farbabspalter, die in oxidierter Form einer intramolekularen Verdrängungsreaktion unterliegen unter Freisetzung eines diffusionsfähigen Farbstoffes, sind beispielsweise Gegenstand von US 3 443 940. Aus diesen Farbabspaltern werden Farbstoffe mit Sulfinatgruppen freigesetzt.

Beispiele für oxidierbare Trägerreste, von denen in oxidierter Form ein daran gebundener Farbstoffrest abgespalten wird, sind im folgenden aufgeführt:

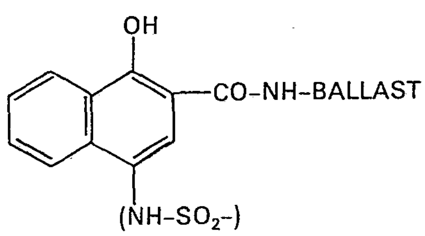

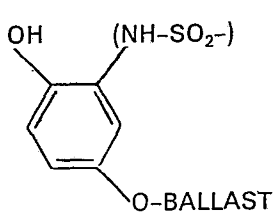

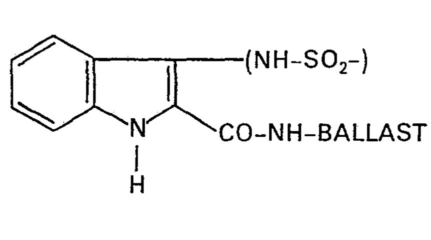

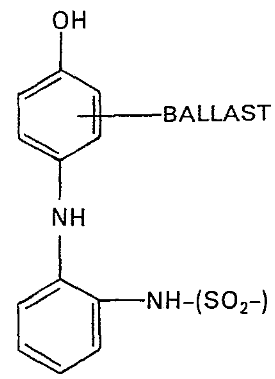

Die in Klammern eingeschlossenen Gruppen werden zusammen mit dem Farbstoffrest abgespalten; sie verbleiben als funktionelle Gruppen beim Farbstoff, an den sie gegebenenfalls über ein Zwischenglied gebunden sind.

Bei den bisher genannten Farbabspaltertypen werden die Farbstoffreste proportional zur Bildungsrate eines Oxidationsproduktes durch Entwicklung von Silberhalogenid oder durch katalytische Verstärkung z.B. mit $H_2O_2$, abgespalten. Dieses Prinzip arbeitet daher als Negativverfahren und bedarf zur Herstellung positiver Bilder einer Umkehrung, z.B. durch Verwendung direkt positiver Emulsionen oder durch eine nach dem Prinzip der Silbersalzdiffusion arbeitende Schichtanordnung.

Es ist besonders vorteilhaft, wenn der eine Ballastgruppe und einen Redoxteil aufweisende Trägerrest so aufgebaut ist, dass der diffusionsfähige Azofarbstoff annähernd umgekehrt proportional zum Entwicklungszustand der Silberhalogenidschicht unter alkalischen Bedingungen freigesetzt wird. In diesem Fall handelt es sich um ein von vornherein positiv arbeitendes System, das zur Herstellung positiver Bilder unter Verwendung herkömmlicher negativer Silberhalogenidemulsionen geeignet ist. Derartige Farbabspalter sind ebenfalls bekannt und werden im folgenden beschrieben.

Oxidierbare Farbabspalter, die in oxidierter Form stabil sind, jedoch in reduzierter Form einer intramolekularen nukleophilen Verdrängungsreaktion unterliegen unter Abspaltung eines Farbstoffrestes, sind beispielsweise Gegenstand von DE-OS 2 402 900 und DE OS 2 543 902.

Oxidierbare Farbabspalter, die in oxidierter Form stabil sind, jedoch in reduzierter Form den Farbstoff in einer Eliminierungsreaktion freisetzen, sind beschrieben in DE-OS 2 823 159 und DE-OS 2 854 946.

Die Wirkungsweise der beiden zuletzt genannten Gruppen von Farbabspaltern lässt sich umkehren, wenn derartige Verbindungen nicht in reduzierter Form, sondern in oxidierter Form eingesetzt werden. Auf diese Weise kommt man zu den im folgenden erwähnten Farbabspaltertypen.

Reduzierbare Farbabspalter, die nach Reduktion einer intramolekularen nukleophilen Verdrängungsreaktion unter Freisetzung eines Farbstoffrestes unterliegen, sind Gegenstand der DE-OS 2 809 716. Diese Verbindungen werden als sogenannte BEND-Verbindungen bezeichnet (BEND - «Balasted Electron-accepting Nucleophilic Displacement»).

Reduzierbare Farbabspalter, die nach Reduktion einer Eliminierungsreaktion unterliegen unter Freisetzung eines Farbstoffes sind Gegenstand der veröffentlichten europäischen Patentanmeldung 4399 und der englischen Patentanmeldung 8 012 242.

Weitere Klassen von reduzierbaren Farbabspaltern, die nach ähnlichen Reaktionsweisen reduktiv spaltbar sind unter Freisetzung von Farbstoffen, sind Gegenstände der DE-OS 3 008 588 und der DE-OS 3 014 669.

Beispiele für reduzierbare Trägerreste, von denen ein daran gebundener Farbstoffrest reduktiv abgespalten wird, sind im folgenden aufgeführt.

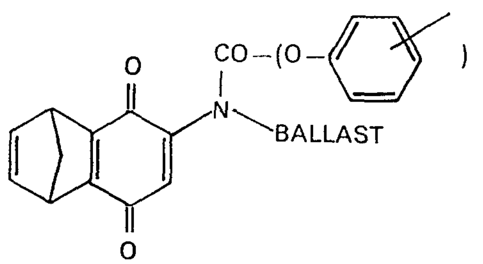

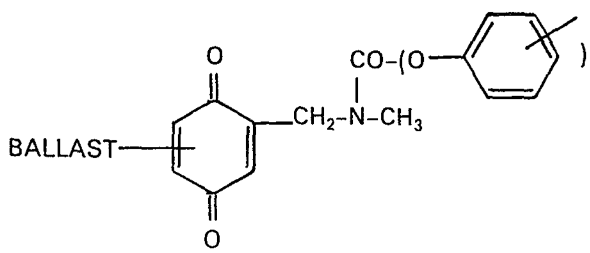

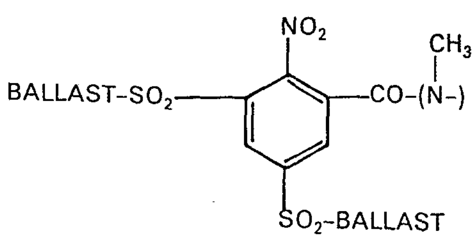

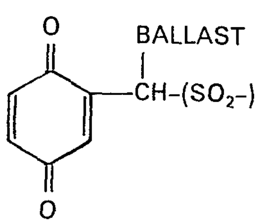

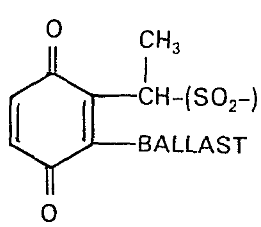

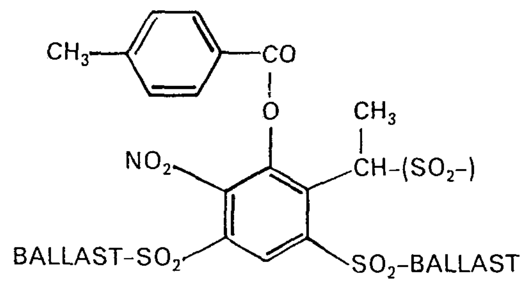

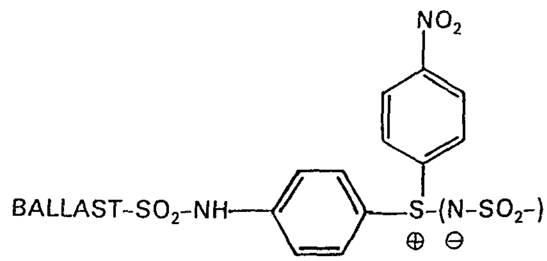

Die in Klammern eingeschlossenen Gruppen, sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Bedeutung der Reste $R^{13}$-$R^{18}$, $-SO_2-Y$ und G in der Formel XIV erwähnt worden sind und die einen unmittelbaren Einfluss auf die Absorptions- und Komplexbildungseigenschaften der erfindungsgemässen Farbstoffe der Formel XIV ausüben. Die funktionelle Gruppe kann andererseits aber auch von dem Chromophor des erfindungsgemässen Farbstoffes durch ein Zwischenglied getrennt sein, indem sie sich als Substituent in einer der für $R^{13}$ bis $R^{18}$ und G definierten Gruppen befindet, ohne dass hierdurch ein Einfluss auf die Absorptions- und Komplexbildungseigenschaften wirksam werden müsste. Die funktionelle Gruppe kann jedoch gegebenenfalls zusammen mit dem Zwischenglied von Bedeutung sein für das Diffusions- und Beizverhalten der erfindungsgemässen Farbstoffe. Geeignete Zwischenglieder sind beispielsweise Alkylen- oder Arylengruppen.

Die zuletzt erwähnten Klassen von reduzierbaren, reduktiv spaltbaren Farbabspaltern werden zweckmässigerweise zusammen mit sogenannten Elektronendonorverbindungen (ED-Verbindungen) verwendet. Letztere wirken als Reduktionsmittel, das bei der Entwicklung des Silberhalogenids bildmässig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in DE-OS 2 809 716 beschrieben sind. Besonders günstige ED-Verbindungen sind Gegenstand der DE-OS 3 006 268.

Beispiele geeigneter ED-Verbindungen sind im folgenden aufgeführt.

ED 1

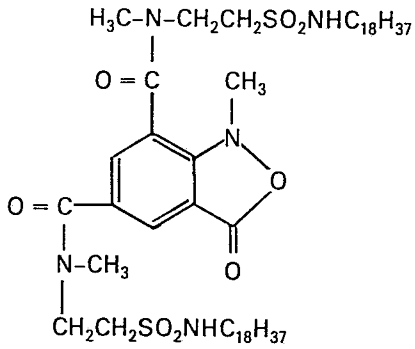

ED 2

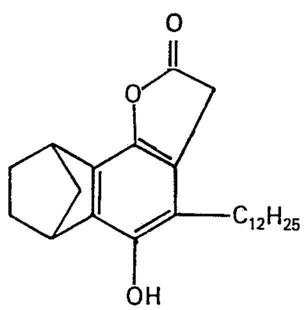

ED 3

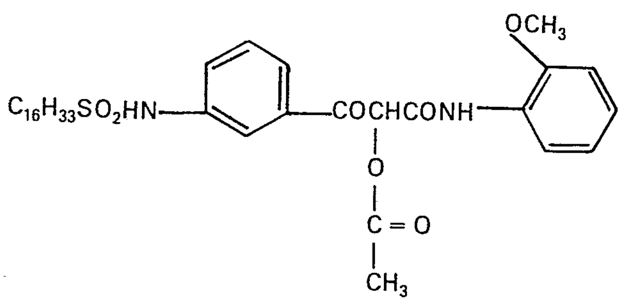

ED 4

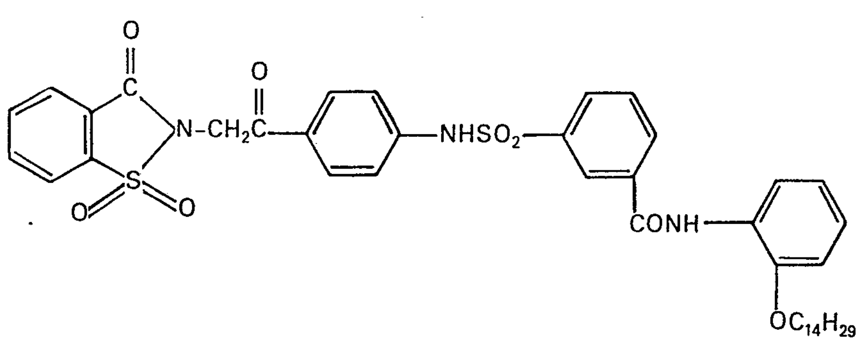

ED 5

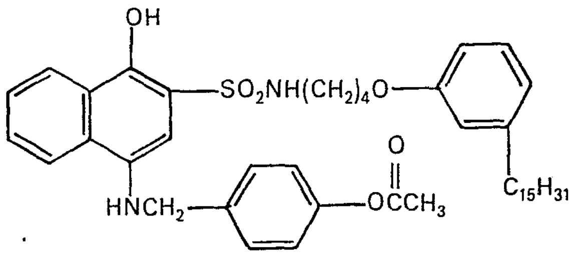

ED 7

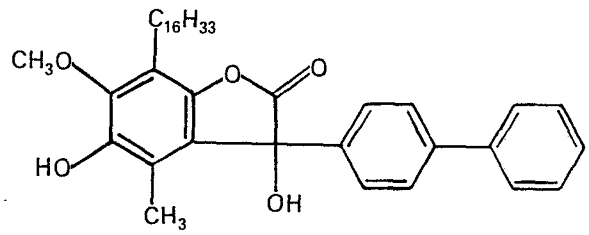

ED 6

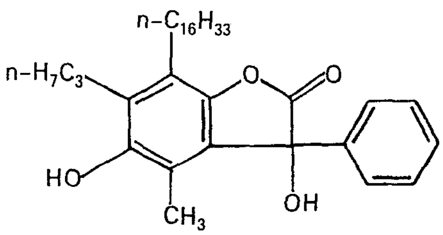

Beispiele für erfindungsgemässe, zu blaugrünen Nickel- oder Kupferkomplexen mit besonders günstiger Absorption metallisierbare Monoazofarbstoffe der Formel XIV sind im folgenden aufgeführt.

Bei den durch ein Sternchen (*) gekennzeichneten Farbstoffen handelt es sich um Modellfarbstoffe, die in präparativ einfacher Weise in erfindungsgemässe Farbabspalter der Formel XV oder daraus freigesetzte Farbstoffe der Formel XIV überführt werden können.

Farbstoffe 1–7

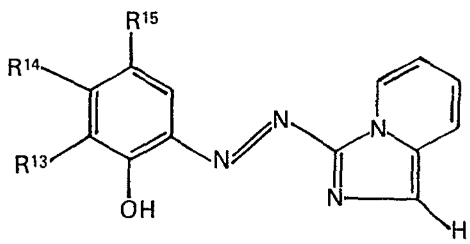

| Farbstoff | $R^{13}$ | $R^{14}$ | $R^{15}$ |
|---|---|---|---|
| 1* | $-NO_2$ | H | $-SO_3H$* |
| 2 = Beispiel 28 | Cl | H | $-SO_2NH_2$ |
| 3 = Beispiel 34 | $-NO_2$ | H | $-SO_2NH_2$ |
| 4 = Beispiel 40 | H | $-SO_2NH_2$ | Cl |
| 5 = Beispiel 21 | $-SO_2NH_2$ | H | Cl |
| 6 = Beispiel 43 | H | $-SO_2NH_2$ | $-NO_2$ |
| 7 | $-NO_2$ | H | $-SO_2-NHSO_2-$ 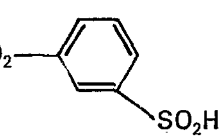 |

Farbstoffe 8–25

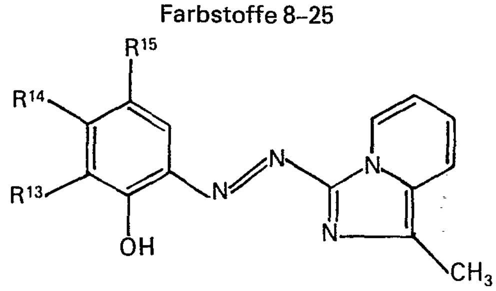

| Farbstoff | $R^{13}$ | $R^{14}$ | $R^{15}$ |
|---|---|---|---|
| 8 = Beispiel 22 | $-SO_2NH_2$ | H | Cl |
| 9 = Beispiel 29 | Cl | H | $-SO_2NH_2$ |

Farbstoffe 8–25 (Fortsetzung)

| Farbstoff | $R^{13}$ | $R^{14}$ | $R^{15}$ |
|---|---|---|---|
| 10* = Beispiel 56 | Cl | H | $-SO_3H$ |
| 11 = Beispiel 41 | H | $-SO_2NH_2$ | Cl |
| 12 = Beispiel 44 | H | $-SO_2NH_2$ | $-NO_2$ |
| 13 = Beispiel 35 | $-NO_2$ | H | $-SO_2NH_2$ |
| 14* = Beispiel 62 | H | H | $-COOH$ |
| 15* | $-NO_2$ | H | $-SO_3H$ |
| 16* | H | H | $-SO_3H$ |
| 17 = Beispiel 20 | H | H | $-SO_2NH_2$ |
| 18* = Beispiel 58 | $-SO_3H$ | H | $-CH_3$ |
| 19* = Beispiel 59 | $-SO_3H$ | H | $-SO_3H$ |
| 20 | $-NO_2$ | H | $-SO_2-(CH_2)_3-SO_2-NH_2$ |
| 21 | $-NO_2$ | H | 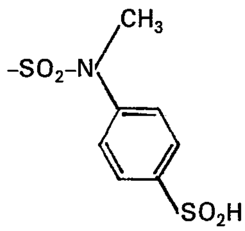 |
| 22 | $-NO_2$ | H | 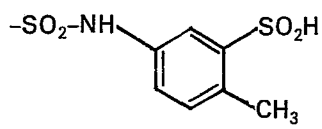 |
| 23 | Cl | H | 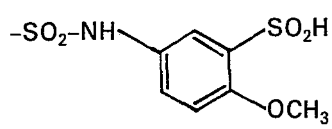 |
| 24 | H | H | 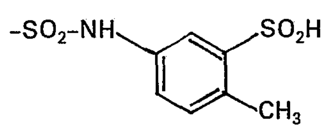 |
| 25 | $-NO_2$ | H | $-SO_2H$ |

Farbstoffe 26–31

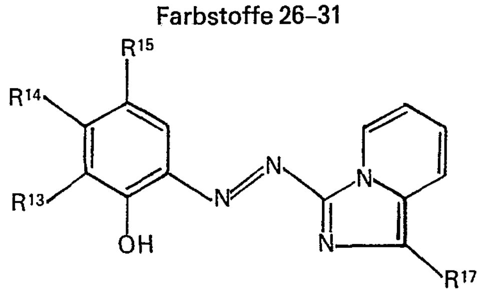

| Farbstoffe | $R^{13}$ | $R^{14}$ | $R^{15}$ | $R^{17}$ |
|---|---|---|---|---|
| 26 = Beispiel 30 | Cl | H | $-SO_2NH_2$ | $-C_2H_5$ |
| 27* = Beispiel 39 | $-NO_2$ | H | $-SO_3H$ | 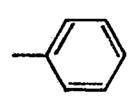 |
| 28 = Beispiel 25 | $-SO_2NH_2$ | H | Cl | 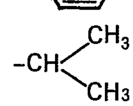 |

Farbstoffe 26-31 (Fortsetzung)

| Farbstoffe | $R^{13}$ | $R^{14}$ | $R^{15}$ | $R^{17}$ |
|---|---|---|---|---|
| 29 = Beispiel 32 | Cl | H | $-SO_2NH_2$ | 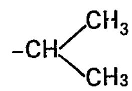 |
| 30 | H | 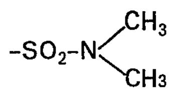 | H | 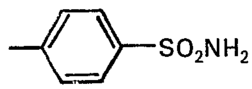 |
| 31 | Cl | H | $-SO_2H_2$ | $-SCH_3$ |

Farbstoffe 32-36

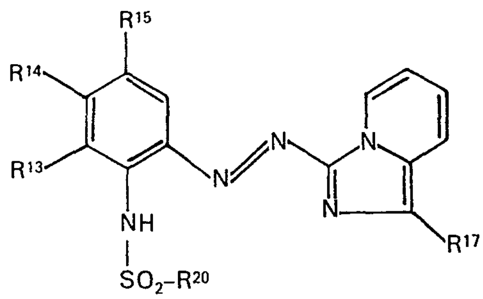

| Farbstoffe | $R^{13}$ | $R^{14}$ | $R^{15}$ | $R^{17}$ | $R^{20}$ |
|---|---|---|---|---|---|
| 32 | $-NO_2$ | H | $-SO_2NH_2$ | $-CH_3$ | 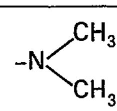 |
| 33 | $-NO_2$ | H | $-SO_2NH_2$ | $-CH_3$ | $-CH_3$ |
| 34 | H | $-NO_2$ | H | $-CH_3$ | 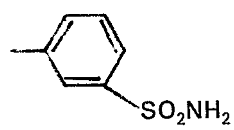 |
| 35 | H | $-NO_2$ | H | $-CH_3$ | 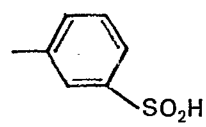 |
| 36 | H | $-NO_2$ | H | 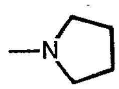 | 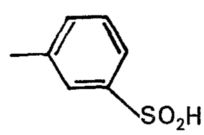 |

Farbstoffe 37

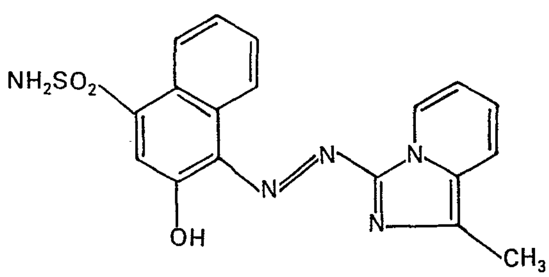

Farbstoffe 38

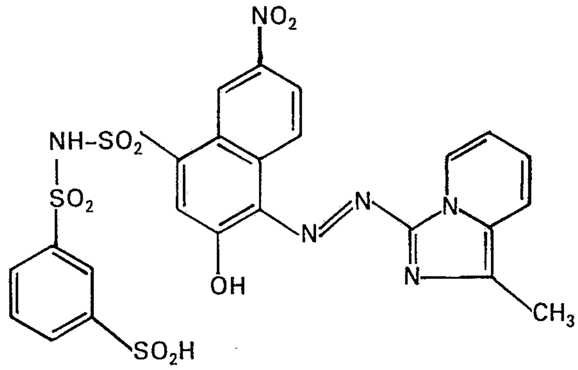

Farbstoffe 39

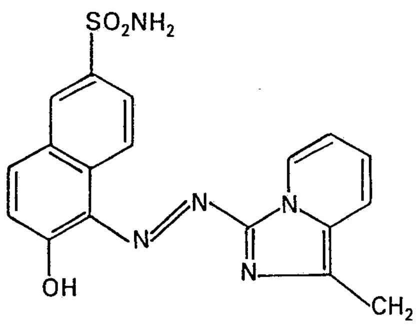

Farbstoffe 40

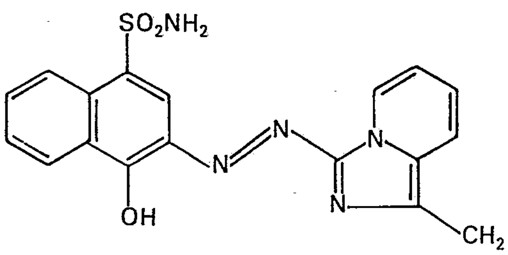

Farbstoffe 41

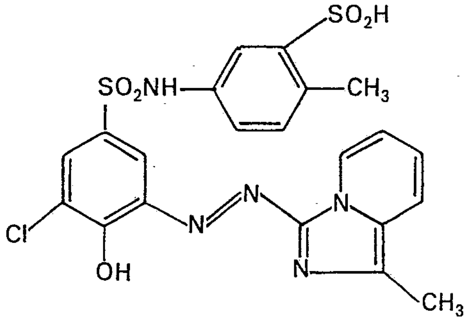

Farbstoffe 42

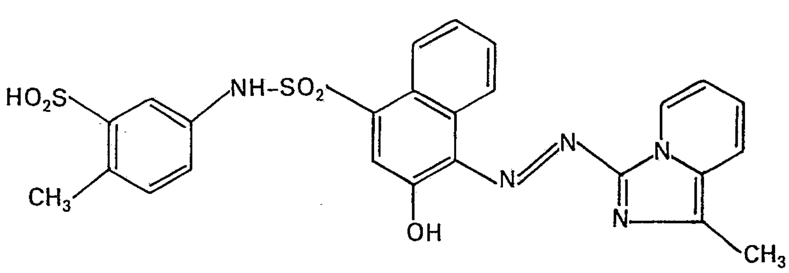

Die Herstellung der Farbstoffe erfolgt wie bereits erwähnt in an sich bekannter Weise durch Kupplung diazotierter Amine der Formel XVI

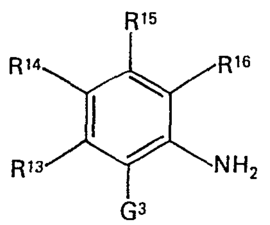

XVI

worin $R^{13}$, $R^{14}$, $R^{15}$ und $R^{16}$ die oben angegebenen Bedeutungen haben und $G^3$ für G oder eine durch G ersetzbare Gruppe, z.B. Halogen oder $-OSO_3^{\ominus}$, steht, in wässrigem, organischem oder wässrig organischem Medium mit Kupplungskomponenten der Formel

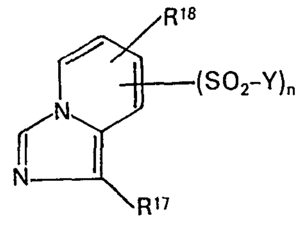

XVII

worin $R^{17}$, $R^{18}$ und $-(SO_2Y)_n$ die oben angegebenen Bedeutungen haben. Ist $R^{17}$ = H, dann erhält man Gemische von Farbstoffen, von denen der tieferfarbige der Struktur XIV entspricht.

Die Einführung von Sulfogruppen in den Pyridylteil des Imidazo[1,5-a]pyridins gelingt beispielsweise nachträglich durch Sulfonierung oder Umsetzung mit Chlorsulfonsäure.

Farbabspalter 1

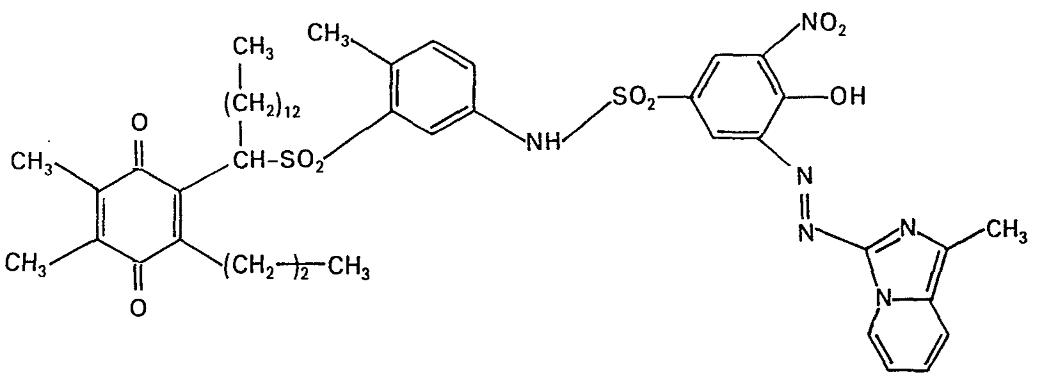

a) 7-Nitro-2-methylbenzoxoazolsulfochlorid-5
23,4 g 2-Amino-6-nitrophenol-4-sulfonsäure (0,1 Mol) werden unter Rühren am Dampfbad in 450 ml Pyridin mit 25 g Acetanhydrid versetzt. Man rührt 30 Minuten weiter und saugt nach Abkühlen auf Raumtemperatur ab. Die rohe Diacetylverbindung wird bei 60°C mit 45 g $PCl_5$ 1 h gerührt und nach Abkühlen auf 200 g Eis ausgetragen. Man saugt ab und kristallisiert das erhaltene Sulfochlorid zweimal aus Acetonitril um. Ausbeute: 20 g (73% der Theorie).
Fp. 155°C Das Kernresonanzspektrum weist auf die Konstitution eines 2-Methylbenzoxazolsulfochlorids hin (1 Methylsignal).

b) 2,3-Dimethyl-5-propyl-6-[α-(2-methyl-5-aminobenzolsulfonyl)-tetradecyl]-benzochinon-1,4
Zu 19,6 g 2,3-Dimethyl-5-propyl-6-(α-hydroxytetradecyl)-hydrochinon (dessen Herstellung in der veröffentlichten europäischen Patentanmeldung 0 004 399 beschrieben ist) und 11,1 g 2-Methyl-5-aminobenzolsulfinsäure in 300 ml Eisessig tropft man unter Rühren 30 ml 20%ige Schwefelsäure. Man hält 15 min auf 60°C, gibt 30 g Eisen-III-chlorid-hexahydrat zu und hält weitere 20 min auf 60°C. Man rührt in 300 ml Wasser und saugt nach eingetretener Kristallisation ab. Man wäscht mit Wasser nach, digeriert mit heissem Methanol, saugt erneut ab und trocknet im Vakuum. Ausbeute: 28 g.

c) 5,2 g Chinonverbindung aus b) werden in 50 ml Pyridin bei 5–10°C mit 3,5 g 7-Nitro-2-methylbenzoxazol-5-sulfochlorid aus a) über 30 h umgesetzt. Anschliessend wird nach Zugabe von 5 g Eis 1 h weitergerührt und durch Eintragen in Wasser ausgefällt. Das Rohprodukt besteht nach Ausweis des Dünnschichtchromatogramms aus 2 Komponenten. Nach 3stündiger Digestion mit 100 ml Eisessig und 2 ml $H_2SO_4$ ist der schwächergelb gefärbte Fleck des Dünnschichtchromatogramms verschwunden. Das Produkt wird mit 50 ml Wasser ausgefällt und durch mehrmaliges Digerieren mit Methanol in Gegenwart von wenig Pyridin und Wasser gereinigt. Ausbeute: 5,1 g.

d) 5 g 2-Amino-6-nitrophenolverbindung aus c) werden in 150 ml Aceton nach Zugabe von 2 ml $H_2SO_4$ mit 1 ml Isoamylnitrit bei 0°C diazotiert. Nach 2stündigem Stehen wird ein Überschuss an salpetriger Säure mit 1 g Harnstoff in 5 ml Methanol zerstört, die Diazoniumlösung in eine Lösung von 1 g 1-Methyl-imidazo[1,5-a]pyridin und 10 g Natriumacetat in 100 ml Methanol bei 0°C eingetragen und über Nacht im Eisbad gerührt.

Man trägt dann in 300 g Eis ein. Der ausgefallene Farbabspalter ist nach zweimaligem Verrühren mit je 100 ml Methanol und Umkristallisation aus Ethylacetat/Methanol zur Verwendung bereit. Ausbeute: 5,1 g.

Farbabspalter 2

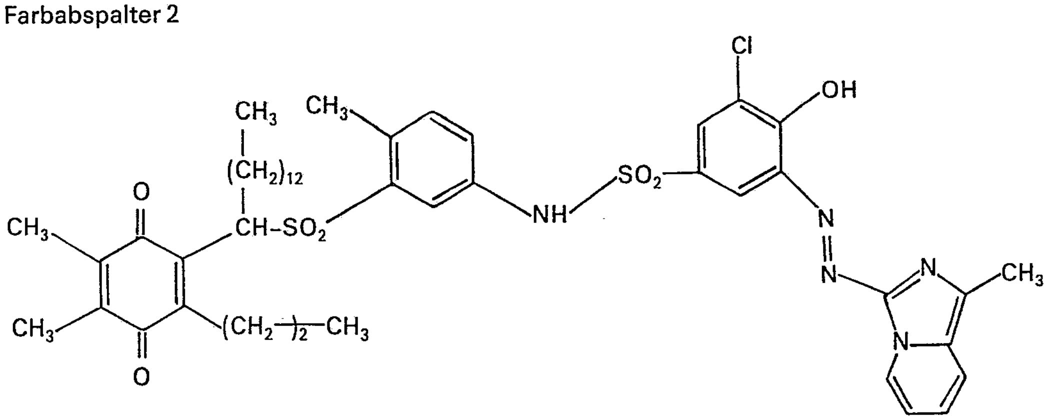

wird analog Farbabspalter 1 über die Zwischenstufen

e) 7-Chlor-2-methylbenzoxazol-5-sulfochlorid,

b) 2,3-Dimethyl-5-propyl-6-[α-(2-methyl-5-aminobenzolsulfonyl)-tetradecyl]-benzochinon-1,4

und das daraus durch hydrolytische Spaltung in Eisessig/HCl zugängliche Aminophenol

f) 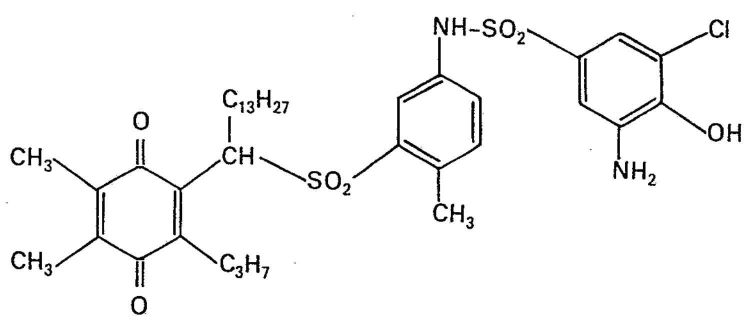

hergestellt. Ausbeute nach chromatographischer Reinigung 50%.

Farbabspalter 3

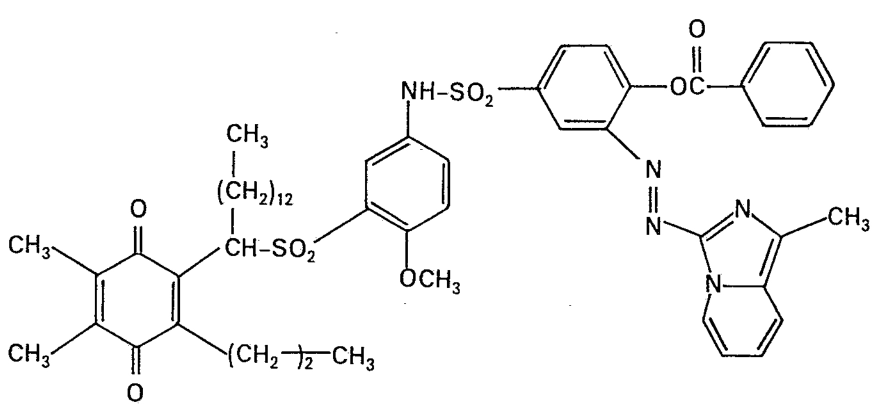

g) 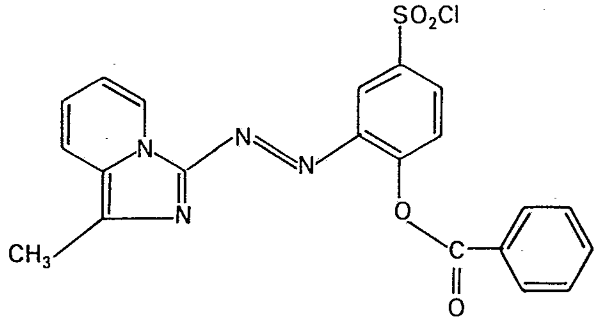

10 g Na-Salz von Farbstoff 16 werden in 60 ml Pyridin mit 6 ml Benzoylchlorid 1 h bei 60°C gerührt. Man fällt das Pyridiniumsalz mit Methylethylketon, trocknet im Vakuum und rührt anschliessend mit 25 g $PCl_5$ und 3 ml $POCl_3$ bei 60°C am Wasserbad. Nach 30 min ist Verflüssigung eingetreten. Man rührt noch 30 min bei 70°C weiter, trägt auf 500 g Eis aus und isoliert durch Absaugen. Zur Reinigung wird mit 20 ml Isopropanol bei 0°C verrührt und erneut abgesaugt.

h) 2,3-Dimethyl-5-propyl-6-[α-(2-methoxy-5-aminobenzolsulfonyl)-tetradecyl]-benzochinon-1,4:
Herstellung analog Zwischenstufe b unter Verwendung von 2-Methoxy-5-aminobenzolsulfonsäure als Ausgangsmaterial: braunes Öl.

Zu 11,2 g Zwischenstufe h und 5 ml Pyridin in 50 ml Dichlormethan tropft man bei −5°C die Lösung von 9,2 g Zwischenstufe g in 90 ml Dichlormethan. Anschliessend dampft man bei 60°C ein und rührt in 200 ml Isopropanol/Wasser 1:1 ein. Nach 1 h erstand das Öl. Man dekantiert ab, wäscht mit 100 ml Wasser und digeriert mit 50 ml Methanol.

Ausbeute 17,5 g rotviolettes Pulver. Dünnschichtchromatographisch lässt sich die Gegenwart von ca. 5% der debenzoylierten Verbindung nachweisen. Zur Reinigung chromatographiert man über Kieselgel.

Farbabspalter 4

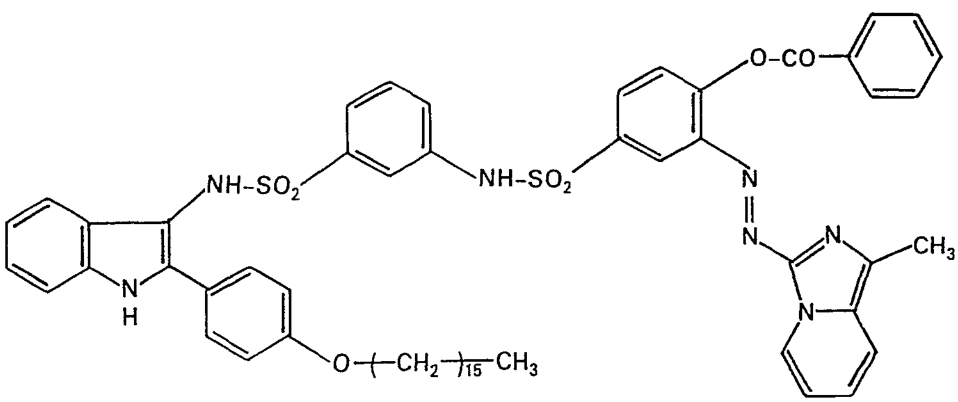

i)

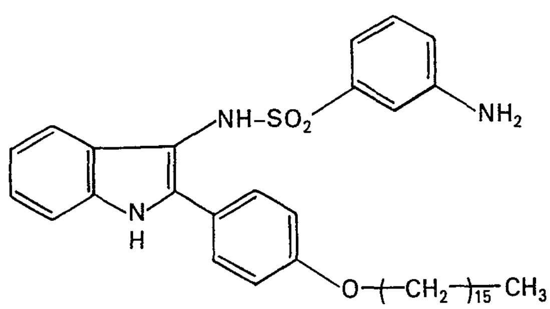

hergestellt aus 2-(4-Cetyloxyphenyl)-3-aminoindol (DE-OS 2 505 248) durch Umsetzung mit 3-Nitrobenzolsulfochlorid und katalytische Reduktion über Raney-Nickel.

Zwischenstufe g wird mit Zwischenstufe i unter den in DE-OS 2 505 248, S. 15 (dort: Herstellung der farbgebenden Verbindung 4) angegebenen Bedingungen umgesetzt. Ausbeute 60%. Zur Reinigung, bzw. zur Entfernung der purpurfarbigen debenzoylierten Verbindung wird über Kieselgel chromatographiert.

Farbabspalter 5

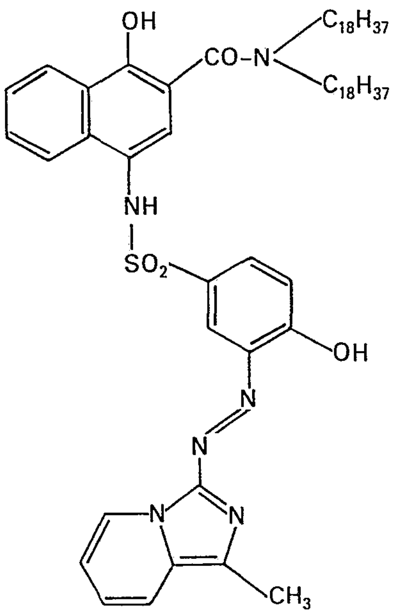

wird aus Zwischenstufe g und 4-Amino-1-naphthol-2-carbonsäure-dioctadecylamid durch Umsetzung analog Farbabspalter 4 hergestellt und durch Verteilung zwischen Cyclohexan und Nitromethan gereinigt. Alle Operationen werden in Stickstoffatmosphäre durchgeführt.

Die erfindungsgemässen Farbabspalter werden in Zuordnung zu einer lichtempfindlichen Silberhalogenidemulsionsschicht einem farbfotografischen Aufzeichnungsmaterial für das Farbdiffusionsübertragungsverfahren einverleibt. Bei monochromatischen Verfahren enthält ein solches Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäss mindestens einer dieser Schichten ein Farbabspalter gemäss Formel XV zugeordnet ist. Die Farbabspalter liefern bei der Entwicklung bildmässig diffusionsfähige Farbstoffe, die nach Diffusion in eine Bildempfangsschicht mit Nickel- oder Kupferionen zu blaugrünen Bildfarbstoffen komplexiert werden. Die Farbabspalter der Erfindung sind daher bevorzugt einer rotempfindlichen Silberhalogenidemulsionsschicht zugeordnet.

Unter «Zuordnung» und «zugeordnet» wird verstanden, dass die gegenseitige Anordnung von lichtempfindlicher Silberhalogenidemulsionsschicht und Farbabspalter von solcher Art ist, dass bei der Entwicklung eine Wechselwirkung zwischen ihnen möglich ist, die eine Freisetzung des diffusionsfähigen durch Metallionen komplexierbaren Azofarbstoffes als Funktion der Entwicklung der Silberhalogenidemulsionsschicht zulässt. Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemässen Farbabspaltern um reduzierbare, reduktiv spaltbare Verbindungen handelt, die zweckmässig gemeinsam mit ED-Verbindungen (oder deren Vorläufer, z.B. gemäss DE-OS P 3 006 268) verwendet wurden, ist unter Zuordnung zu verstehen, dass die gegenseitige Anordnung von Silberhalogenidemulsionen ED-Verbindung bzw. ED-Vorläuferverbindung und Farbabspalter von solcher Art ist, dass eine Wechselwirkung zwischen ihnen möglich ist, die eine bildmässige Übereinstimmung zwischen dem gebildeten Silberbild und dem Verbrauch an ED-Verbindung einerseits sowie zwischen der nicht verbrauchten ED-Verbindung und dem Farbabspalter andererseits zulässt, so dass in Übereinstimmung mit dem nicht entwickelten Silberhalogenid eine bildweise Verteilung von diffusionsfähigem Farbstoff erzeugt wird.

Obwohl für die Einarbeitung der erfindungsgemässen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, dass Farbabspalter und ED-Verbindungen in Form eines gemeinsamen Emulgates in besonders engen funktionellen Kontakt gebracht werden können. Geeignete Ölbildner sind beispielsweise beschrieben in US 2 322 027, DE-OS 1 772 192, DE-OS 2 042 659 und DE-OS 2 049 689. Die optimalen Mengen des einzuarbeitenden Farbabspalters und gegebenenfalls der ED-Verbindung können durch einfache routinemässige Tests ermittelt werden. Der Farbabspalter der vorliegenden Erfindung wird beispielsweise in Mengen von 0,05–0,2 Mol und die ED-Verbindung, falls vorhanden, in Mengen von 0,1–0,6 Mol pro Mol Silberhalogenid verwendet.

Die Entwicklung des bildmässig belichteten erfindungsgemässen farbfotografischen Aufzeichnungsmaterials wird durch Behandlung mit einer wässrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemässen farbfotografischen Aufzeichnungsmaterials enthalten sein. Bei der Entwicklung werden aus den Farbabspaltern bildmässig diffusionsfähige Farbstoffe freigesetzt und auf eine Bildempfangsschicht übertragen, die entweder integraler Bestandteil des erfindungsgemässen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus

einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US 3 721 147 und US 3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-OS 2 315 304, DE-OS 2 631 521 oder in DE-OS 2 941 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen quaternären Basen, wie etwa von N-Methyl-2-vinyl-pyridin, wie beispielsweise beschrieben in US 2 484 430. Weitere brauchbare beizende Bindemittel sind beispielsweise Guanylhydrazonderivate von Alkylvinylketonpolymerisaten, wie beispielsweise beschrieben in der US 2 882 156, oder Guanylhydrazonderivate von Acylstyrol-polymerisaten, wie beispielsweise beschrieben in der DE-OS 2 009 498. Im allgemeinen wird man jedoch den zuletzt genannten beizenden Bindemitteln andere Bindemittel, z.B. Gelatine, zusetzen.

Darüber hinaus kann im vorliegenden Fall die Bildempfangsschicht oder eine hierzu benachbarte Schicht Schwermetallionen, insbesondere Kupfer- oder Nickelionen enthalten, die mit den eindiffundierenden Tridentat-Azofarbstoffen der Erfindung die entsprechenden Azofarbstoff-Metall-Komplexe bilden mit den erwähnten vorteilhaften Eigenschaften hinsichtlich Absorption und Stabilität. Die Metallionen können in der Bildempfangsschicht in komplex gebundener Form vorliegen, z.B. gebunden an bestimmte Polymerisate wie etwa beschrieben in Research Disclosure 18 534 (Sept. 1979), in DE-OS 3 002 287 und DE-OS 3 105 777. Es ist aber auch möglich die Azofarbstoff-Metall-Komplexe nach erfolgter Diffusion in der Bildempfangsschicht dadurch zu erzeugen, dass die Bildempfangsschicht mit der darin entstandenen bildmässigen Verteilung an erfindungsgemässen Farbstoffen mit einer Lösung eines Salzes eines der genannten Schwermetalle behandelt wird. Auch die bei der Entwicklung in Zuordnung zu den ursprünglich lichtempfindlichen Schichten bildmässig (als Negativ zu dem Übertragsbild) zurückbleibenden Farbabspalter der Formel XV können durch Behandlung mit Schwermetallionen in die entsprechenden Azofarbstoff-Metall-Komplexe überführt werden («retained image»). In jedem Fall besteht das mit dem erfindungsgemässen farbfotografischen Material erzeugte Farbbild aus einer bildmässigen Verteilung von Metallkomplexen, insbesondere von Nickel- oder Kupferkomplexen der erfindungsgemässen Farbabspalter der Formel XV oder der daraus freigesetzten Azofarbstoffe der Formel XIV sowie gegebenenfalls weiterer Farbstoffe, die in letzterem Fall in der Bildempfangsschicht mittels der darin enthaltenen Beizmittel festgelegt sind.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotographischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muss entweder der Schichtträger transparent sein, so dass das erzeugte Farbübertragsbild durch ihn hindurch betrachtet werden kann, oder das lichtempfindliche Element muss mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmässigerweise durch den transparenten Schichtträger vorgenommen wird.

Anwendungsbeispiel 1

Bildempfangsblatt 1

Auf einen beidseitig mit Polyethylen beschichteten und mit einer Haftschicht versehenen Papierträger wurden folgende Schichten aufgetragen. Die Angaben beziehen sich auf 1 $m^2$.

1. Eine Beizschicht mit 6 g eines Polyurethans gemäss Beispiel 3 der DE-OS 2 631 521 und 5 g Gelatine.
2. Eine Härtungsschicht mit 0,1 g Gelatine und 0,15 g Soforthärtungsmittel

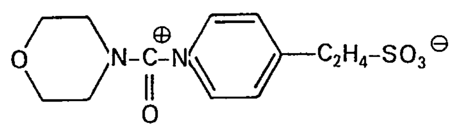

Je 2 Streifen des erhaltenen Bildempfangsmaterials wurden in eine 0,03-molare mit 2% Natriumhydroxid alkalisch eingestellte Farbstofflösung eingetaucht und zu einer Dichte von 1,2–1,5 (gemessen am Reflektionsdensitometer RD 514 / Macbeth hinter Grünfilter) eingefärbt.

Es wurden folgende Farbstoffe verwendet: Farbstoffe 1–6, 8–20, 26–29 (gemäss der Erfindung) und die nicht erfindungsgemässen Vergleichsfarbstoffe A–E.

A

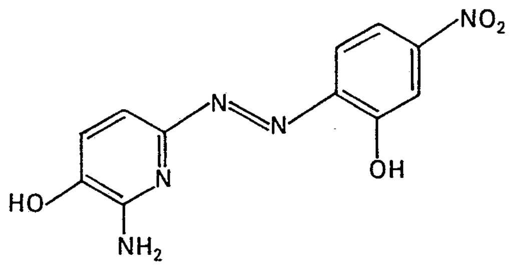

B

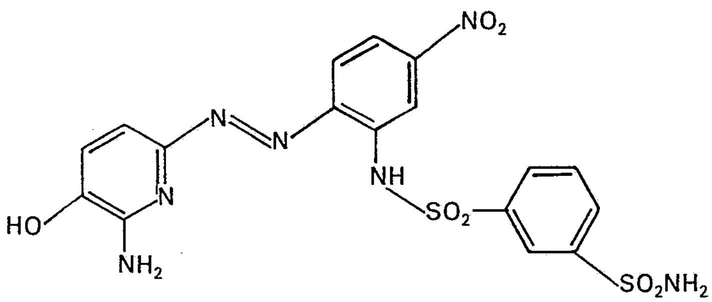

US 4 195 994
Beisp. 3

C

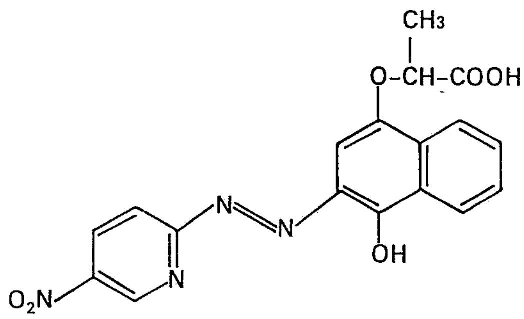

DE-OS 2 740 719
Farbstoff 22

D

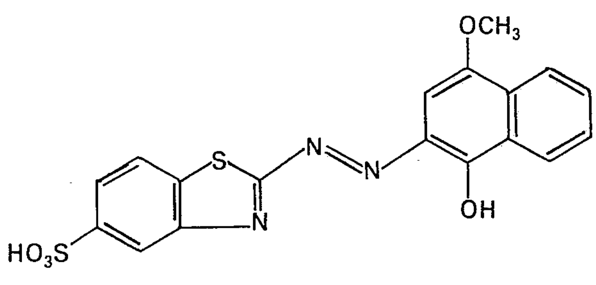

US 4 207 870

E

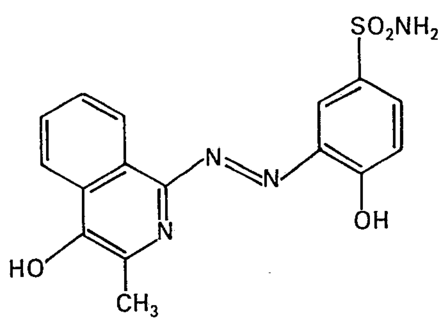

DE-OS 2 740 719
Farbstoff 26

Nach beendeter Tauchbehandlung werden die Proben mit demineralisiertem Wasser gespült und durch Eintauchen in 2%ige Nickelacetatlösung, bzw. 2%ige Kupferacetatlösung metallisiert.

Alle Proben werden danach unter fliessendem Wasser gespült, mit einer 2%igen Bernsteinsäure-pufferlösung (auf pH = 6 gestellt) nachbehandelt und getrocknet.

Nachstehend sind die Ergebnisse der spektralen Messungen zusammengefasst:

Nickelkomplexe

| Farbstoffe | λmax [nm] | Halbbandbreite [nm] | Nebendichten hinter Blaufilter | Grünfilter | Farbeindruck |
|---|---|---|---|---|---|
| 1 | 640 | 549-690 | 30% | 49% | bg |
| 2 | 634 | - | 32% | 55% | bg |
| 3 | 640 | - | 33% | 50% | b |
| 4 | - | - | - | - | gbg |
| 5 | 645 | 534-690 | 31% | 56% | bg |
| 6 | 638 | 525-678 | 38% | 50% | bg t |
| 8 | 665 | 558-706 | 28% | 38% | bg k |
| 9 | 650 | 555-689 | 28% | 38% | bg sk |
| 10 | 656 | 566-690 | 30% | 41% | bg sk |
| 11 | 674 | 575-714 | - | - | gbg |
| 12 | 676 | 565-717 | 36% | 37% | gbg |
| 13 | 655 | 563-691 | 20% | 35% | bg sk |
| 14 | 650 | 550-686 | 36% | 46% | bg |
| 15 | 647 | 534-684 | - | - | bg k |
| 16 | 650 | 555-680 | - | - | bg k |
| 17 | 646 | 544-680 | 34% | 50% | b k |
| 18 | 654 | 555-696 | 34% | 40% | bg k |
| 19 | - | - | 26% | 40% | bg sk |
| 20 | 656 | 555-689 | 25% | 35% | bg k |
| 26 | 655 | 558-688 | 30% | 35% | bg k |
| 27 | 660 | 550-685 | 30% | 40% | bg k |
| 28 | - | - | 29% | 41% | bg k |
| 29 | - | - | 32% | 43% | bg k |
| A | 640 | 500-730 | 54% | 54% | bg st |
| B | 650 | 525-700 | 50% | 50% | bg st |
| C | 660 | 540-700 | 45% | 40% | gbg t |
| D | 585+640 | 520-680 | 29% | 63% | b t |
| E | 648 | 557-684 | 23% | 38% | b k |

Kupferkomplexe (Auswahl)

| | | | | | |
|---|---|---|---|---|---|
| 3 | 640 | 522-713 | 38% | 50% | bg |
| 13 | 650 | 561-720 | 22% | 35% | bg k |

Für die Beurteilung des visuellen Farbeindrukkes werden folgende Symbole verwendet:

b : Farbeindruck zu blau
bg : Farbeindruck korrekt
gbg : visuell grünstichiges Blaugrün
sk : sehr klar
k : klar
t : trüb
st : stumpf, unbrauchbar

Aus den vorliegenden Daten ist zu erkennen, dass die Nickelkomplexe der erfindungsgemässen Farbstoffe in ihren spektralen Daten den meisten vergleichbaren Farbstoffen des Standes der Technik insgesamt überlegen sind. Insbesondere die beschriebenen Pyridinderivate A, B und C sind deutlich stumpfer, das Benzthiazolderivat D ist dagegen zu blau und das Isochinolinolderivat E ist bei gleichwertiger Nuance hinsichtlich der Lichtechtheit den erfindungsgemässen Farbstoffen unterlegen. Innerhalb der erfindungsgemässen Farbstoffe werden die Nickelkomplexe wegen ihrer höheren Klarheit bevorzugt.

Anwendungsbeispiel 2

Lichtempfindliches Element 1 (nicht erfindungsgemäss)

Auf einen beidseitig mit Polyethylen beschichteten Papierträger wurden nacheinander folgende Schichten aufgetragen. Alle Angaben beziehen sich auf 1 m².

1. Eine rotsensibilisierte Silberbromidiodidemulsionsschicht aus 0,5 g $AgNO_3$ mit 0,3 g des nicht erfindungsgemässen Farbabspalters F (= Verbindung 2 aus DE-OS 2 854 946), 0,16 g ED-Verbindung 6 (= Verbindung 4 der DE-OS 3 006 268), 0,46 g Palmitinsäurediethylamid (ge-

meinsamer Ölbildner für Farbabspalter und ED-Verbindung) und 1,15 g Gelatine.

2. Eine Schutzschicht mit 0,6 g Monoacetylierungsprodukt von 4-Methyl-4-hydroxymethyl-phenidon, 0,12 g 2-Isooctadecyl-5-sulfohydrochinon und 0,6 g Gelatine.

3. Eine Härtungsschicht mit 0,1 g Gelatine und 0,12 g Soforthärtungsmittel s. Beispiel 1.

Farbspalter F

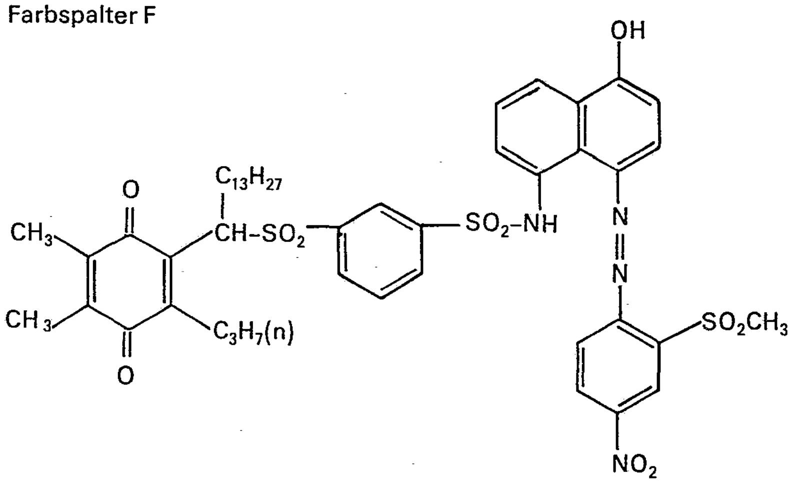

Das bildmässig durch einen Stufenkeil belichtete lichtempfindliche Element 1 und ein Bildempfangsblatt wie in Beispiel 1 beschrieben wurden mit einer Behandlungslösung der nachfolgend angegebenen Zusammensetzung getränkt und schichtseitig zusammengepresst:

925 g $H_2O$
30 g Isobutanol
2 g $Na_2SO_3$
3 g KBr
40 g KOH

Nach einer Kontaktzeit von 2 min wurden die Blätter voneinander getrennt und das Bildempfangsblatt 30 s gewässert. Nach der Trocknung wurden die $D_{min}/D_{max}$-Werte des positiven blaugrünen Farbbildes 1 gemessen.

Lichtempfindliches Element 2-4: (erfindungsgemäss)

Die lichtempfindlichen Element 2-4 unterscheiden sich von Element 1 insofern, als

das lichtempfindliche Element 2 0,40 g Farbabspalter 1 und 0,20 g ED-Verbindung 6 enthält,
das lichtempfindliche Element 3 0,40 g Farbabspalter 2 und 0,20 g ED-Verbindung 6 enthält und
das lichtempfindliche Element 4 0,40 g Farbabspalter 3 und 0,20 g ED-Verbindung 6 enthält.

Die Verarbeitung erfolgte wie im Fall des lichtempfindlichen Elements 1 im Kontakt mit einem wie in Beispiel 1 beschriebenen Bildempfangsblatt 1. Nach dem Trennen werden die mit den lichtempfindlichen Elementen 2, 3 und 4 erhaltenen Blaugrünbilder mit demineralisiertem Wasser abgespült und durch Eintauchen in 2%ige Nikkelacetatlösung metallisiert. Anschliessend werden sie durch ein Bernsteinsäurepufferbad (2% Bernsteinsäure, auf pH = 6 gestellt) neutralisiert und getrocknet.

Die blaugrünen Farbbilder 1–4 werden halbseitig abgedeckt einer 48 h dauernden Xenonlichtbogen-Belichtung ausgesetzt ($4{,}8 \cdot 10^6$ lxh).

Die erhaltenen Daten sind in der nachfolgenden Tabelle zusammengefasst:

| Farbbild | Farb-abspalter | $D_{min}$ | $D_{max}$ | E | $\frac{\Delta D}{D_o}$ |
|---|---|---|---|---|---|
| 1 | F | 0,20 | 2,05 | 100 | -78% |
| 2 | 1 | 0,21 | 2,0 | 80 | -35% |
| 3 | 2 | 0,18 | 2,1 | 95 | -25% |
| 4 | 3 | 0,22 | 2,0 | 110 | -13% |

In der 5. Spalte ist die Empfindlichkeit E in relativen log I·t-Einheiten angegeben.
In der 6. Spalte ist die prozentuale Dichteabnahme bei Bestrahlung mit Xenonlicht angegeben ($4{,}8 \cdot 10^6$ lxh).

Anwendungsbeispiel 3

Die lichtempfindlichen Elemente 5–7 wurden dadurch hergestellt, dass auf einen transparenten Polyesterträger nacheinander folgende Schichten aufgetragen wurden (Mengenangaben auf 1 m²).

1) Metallspenderschicht, enthaltend 2 g Nickelpentadecenylsuccinat und 2,5 g Gelatine.
2) Beizschicht, enthaltend 2,5 g kationisches Polyurethan nach Beispiel 3 der DE-OS 2 631 521 und 3 g Gelatine.
3) Reflektionsschicht, enthaltend 18 g $TiO_2$ und 1,8 g Gelatine.
4) Farbabspalterschicht, enthaltend
4.1 lichtempfindliches Element 5: 0,5 g Farbabspalter 4, 0,05 g octadecylhydrochinonsulfonsaures Kalium, 0,5 g Gelatine
4.2 lichtempfindliches Element 6: 0,5 g Farbabspalter 5, 0,05 g octadecylhydrochinonsulfonsaures Kalium 0,5 g Gelatine

4.3 lichtempfindliches Element 7: 0,5 g Farbabspalter G (nicht erfindungsgemäss); 0,05 g octadecylhydrochinonsulfonsaures Kalium, 0,05 g Gelatine.

Farbspalter G

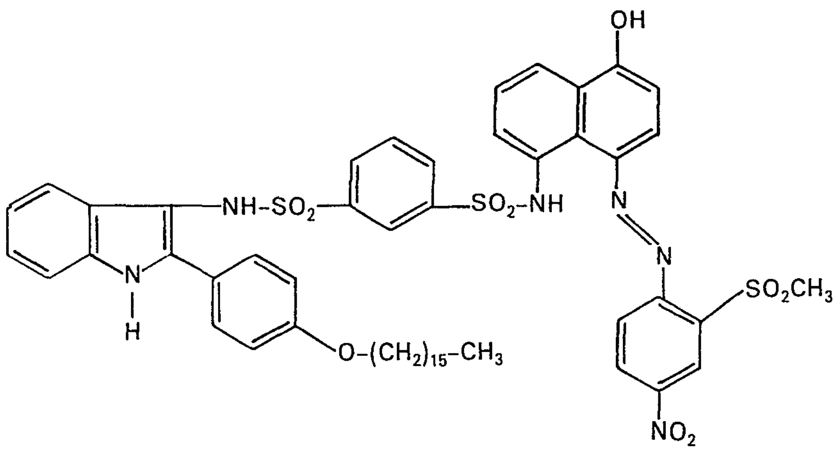

5) Silberhalogenidemulsionsschicht mit einer rotsensibilisierten unverschleierten Direktpositivemulsion mit 1,3 µm grossen octaedrischen Silberbromidkristallen (Auftrag 1,5 g $AgNO_3$), 0,003 g Schleiermittel der Struktur:

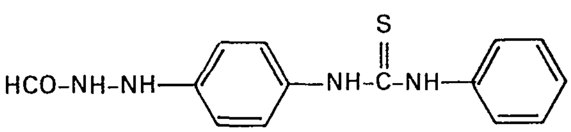

und 1,4 g Gelatine.
6) Härtungsschicht, enthaltend 0,6 g Gelatine und 0,2 g Soforthärtungsmittel wie beschrieben für das Bildempfangsblatt 1 in Anwendungsbeispiel 1.

Je ein Streifen der lichtempfindlichen Elemente 5, 6 und 7 wurde hinter einem Stufenkeil belichtet und in Verbindung mit einem Pastenbeutel, einem Neutralisationsblatt und zwei seitlich angeordneten Abstandshalterstreifen mit 140 µm Stärke durch ein Quetschwalzenpaar geführt.

Nach 10 min bei 25°C wurde das Element abgetrennt und durch Abspülen von der anhaftenden Paste befreit.

Der Pastenentwickler war wie folgt zusammengesetzt.

1,6 g Natriumsulfit
2,8 g 5-Methylbenzotriazol
8,4 g Hydroxymethylmethylphenidon
0,3 g tert.-Butylhydrochinon
0,2 g Methylhydrochinon
1,0 g Cyclohexanol
40,0 g Carboxymethylcellulose
47,0 g Kaliumhydroxid
5,0 g Kaliumfluorid
Wasser auf 1000 g.

Man erhält 3 positive blaugrüne Farbstoffbilder mit folgenden Daten:

| Lichtempfindliches Element | $D_{max}$ | $D_{min}$ | E (log. I·t) | $\frac{\Delta D}{D_o}$ ($4{,}8 \cdot 10^6$ lxh) |
|---|---|---|---|---|
| 5 | 1,70 | 0,22 | 125 | -18% |
| 6 | 1,80 | 0,20 | 125 | -18% |
| 7 | 1,70 | 0,23 | 100 | -43% |

Beispiel 3 zeigt, dass die erfindungsgemässen Imidazo[1,5-a]-pyridylazophenolchromophore bei Verwendung an Farbabspaltern vom negativ arbeitenden Typ der Sulfonamidoindole oder der Sulfonamidonaphthole keine Empfindlichkeitsnachteile verursachen und ihr Lichtechtheitsvorteil auch bei Verwendung hinter einer durchsichtigen Unterlage erhalten bleibt.

## Patentansprüche

1. Monoazofarbstoffe der Formeln

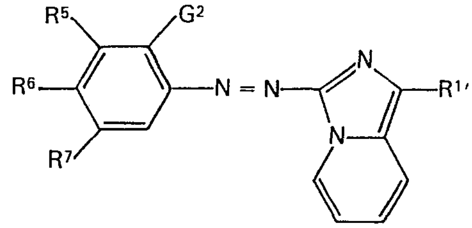

IV

bzw.

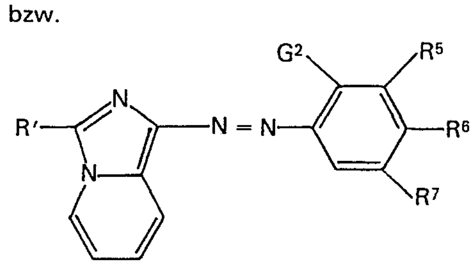

V

und deren Metallkomplexe,
worin bedeuten
$G^2$ OH, COOH,
$R^5$ bis $R^7$ H, F, Cl, Br, Cyan, Nitro, COOH, Sulfo, $CF_3$, Acylamino, gegebenenfalls substituiertes Sulfamoyl oder Carbamoyl, oder zwei benachbarte Reste bedeuten zusammen einen ankondensierten Benzolring, und
R′, $R^{1'}$ H, gegebenenfalls durch Halogen, Alkoxy oder Cyan substituiertes $C_1$-$C_4$-Alkyl oder gegebenenfalls substituiertes Phenyl.

2. Monoazofarbstoffe der Formeln

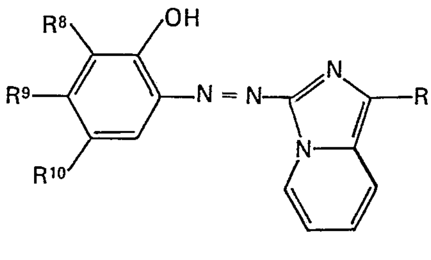

VI

bzw.

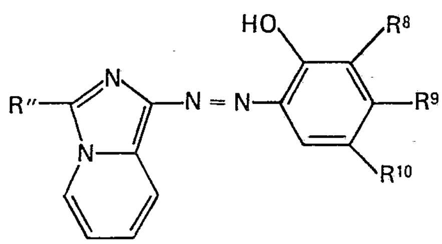

VII

und deren Metallkomplexe,
worin bedeuten
R″ und $R^{1''}$ $C_1$-$C_3$-Alkyl, gegebenenfalls durch $C_1$-$C_4$-Alkyl substituiertes Phenyl,
$R^8$ bis $R^{10}$ H, Cl, $NO_2$, CN, Sulfo, Acylamino, gegebenenfalls substituiertes Sulfamoyl.

3. Co-, Cu-, Ni-, Zn- und Mg-Komplexe der Farbstoffe der Ansprüche 1 oder 2.

4. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger durch Metallionen komplexierbarer Azofarbstoff freigesetzt wird, dadurch gekennzeichnet, dass der Azofarbstoff der folgenden Formel XIV entspricht:

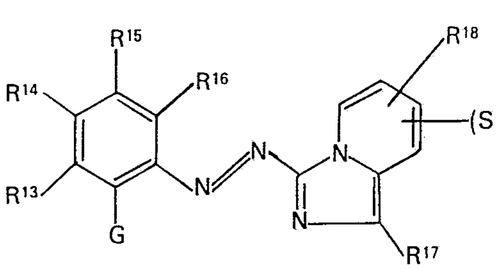

XIV,

worin bedeuten

$R^{13}$, $R^{14}$, $R^{15}$ und $R^{16}$ gleich oder verschieden und zwar -H, -F, -Cl, -Br, -CN, $-NO_2$, $-CF_3$, $-OCF_3$, $-SCF_3$, -Alkyl, Alkoxy, Alkylthio, Acylamino, Alkylsulfonyl, Arylsulfonyl, -CO-X oder $-SO_2$-Y oder zwei zueinander benachbarte Reste aus der Gruppe der Reste $R^{13}$-$R^{16}$ bedeuten gemeinsam einen ankondensierten Benzolring, der gegebenenfalls weitere Substituenten tragen kann;
$R^{17}$ Wasserstoff oder einen Substituenten mit Elektronendonorcharakter;
$R^{18}$ Wasserstoff, Halogen oder Alkyl;
G eine zur Chelatbildung befähigte Gruppe;
X -OH, Alkoxy, eine gegebenenfalls durch Alkyl oder Aryl substituierte Aminogruppe oder eine cyclische Aminogruppe
Y -H, -OH, eine gegebenenfalls durch Alkyl oder Aryl substituierte Aminogruppe, eine cyclische Aminogruppe, oder eine Gruppe der Formel $-NH-SO_2-R^{19}$;
$R^{19}$ Alkyl, Aryl, eine gegebenenfalls zweifach durch Alkyl substituierte Aminogruppe oder eine cyclische Aminogruppe;
n 0 oder 1.

5. Aufzeichnungsmaterial nach Anspruch 4, dadurch gekennzeichnet, dass in Formel XIV G für -OH oder $-NH-SO_2-R^{20}$ steht, worin $R^{20}$ Alkyl, Aryl, eine gegebenenfalls zweifach durch Alkyl substituierte Aminogruppe oder eine cyclische Aminogruppe bedeutet und dass $R^{17}$ für Alkyl, Alkenyl, Aralkyl, Cycloalkyl, Aryl, Alkoxy, Aralkoxy, Aroxy, Alkylthio, Arylthio, eine gegebenenfalls durch Alkyl, Aryl oder Acyl substituierte Aminogruppe oder eine cyclische Aminogruppe steht.

6. Aufzeichnungsmaterial nach Anspruch 4, dadurch gekennzeichnet, dass einer der Reste $R^{13}$, $R^{14}$, $R^{15}$ und $R^{16}$ für eine Sulfamoyl- oder Sulfinatgruppe oder eine durch eine Sulfamoyl- oder Sulfinatgruppe substituierte N-Phenyl-sulfamoylgruppe steht.

7. Fotografisch hergestelltes Farbbild, bestehend aus einer auf einem Schichtträger angeordneten Bindemittelschicht und einer darin enthaltenen bildmässigen Verteilung eines blaugrünen Bildfarbstoffes, dadurch gekennzeichnet, dass als Bildfarbstoff ein Kupfer- oder Nickelkomplex eines Azofarbstoffes einer der folgenden Formeln enthalten ist:

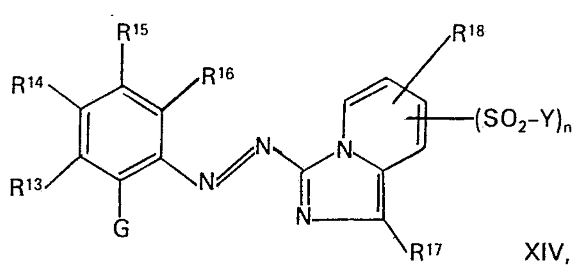

XIV,

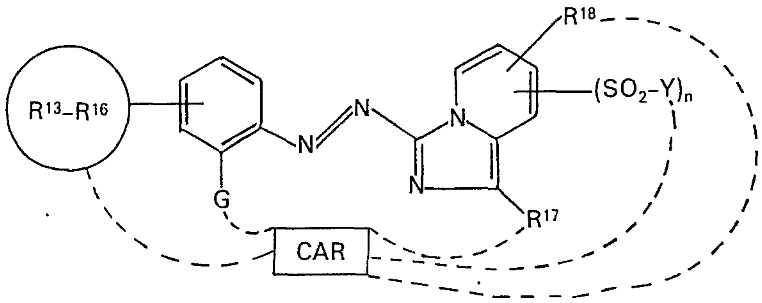

XV,

worin bedeuten

$R^{13}$, $R^{14}$, $R^{15}$ und $R^{16}$ gleich oder verschieden und zwar -H, -F,-Cl, -Br, -CN, $-NO_2$, $-CF_3$, $OCF_3$, $-SCF_3$, -Alkyl, Alkoxy, Alkylthio, Acylamino, Alkylsulfonyl, Arylsulfonyl, -CO-X oder $-SO_2$-Y; oder zwei zueinander benachbarte Reste aus der Gruppe der Reste $R^{13}$-$R^{16}$ bedeuten gemeinsam einen ankondensierten Benzolring, der gegebenenfalls weitere Substituenten tragen kann;

$R^{17}$ Wasserstoff oder einen Substituenten mit Elektronendonorcharakter;

$R^{18}$ Wasserstoff, Halogen oder Alkyl;

G eine zur Chelatbildung befähigte Gruppe;

X -OH, Alkoxy, eine gegebenenfalls durch Alkyl oder Aryl substituierte Aminogruppe oder eine cyclische Aminogruppe

Y -H, -OH, eine gegebenenfalls durch Alkyl oder Aryl substituierte Aminogruppe, eine cyclische Aminogruppe, oder eine Gruppe der Formel $-NH-SO_2-R^{19}$;

$R^{19}$ Alkyl, Aryl, eine gegebenenfalls zweifach durch Alkyl substituierte Aminogruppe oder eine cyclische Aminogruppe;

n 0 oder 1;

CAR einen mindestens eine diffusionsfest machende Gruppe enthaltenden bei der Entwicklung bildmässig abspaltbaren Trägerrest.

8. Farbbild nach Anspruch 7, dadurch gekennzeichnet, dass in Formel XIV G für -OH oder $-NH-SO_2-R^{20}$ steht, worin $R^{20}$ Alkyl, Aryl, eine gegebenenfalls zweifach durch Alkyl substituierte Aminogruppe oder eine cyclische Aminogruppe bedeutet und dass $R^{17}$ für Alkyl, Alkenyl, Aralkyl, Cycloalkyl, Aryl, Alkoxy, Aralkoxy, Aroxy, Alkylthio, Arylthio, eine gegebenenfalls durch Alkyl, Aryl oder Acyl substituierte Aminogruppe oder eine cyclische Aminogruppe steht.

**Revendications**

1. Colorants monoazoïques répondant aux formules:

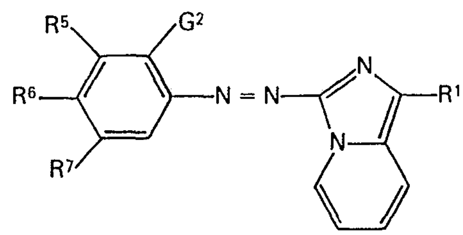

et

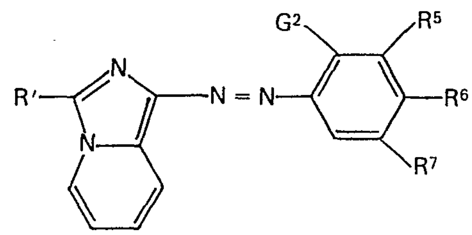

dans lesquelles:
$G^2$ représente OH, COOH,
$R^5$ à $R^7$ représentent chacun H, F, Cl, Br, un groupe cyano, nitro, COOH, sulfo, $CF_3$, acylamino, sulfamoyle ou carbamoyle éventuellement substitué, ou bien deux radicaux voisins forment ensemble un noyau benzénique condensé, et
$R'$, $R^{1'}$ représentent chacun H, un groupe alkyle en $C_1$-$C_4$ éventuellement substitué par de l'halogène ou par un groupe alcoxy ou cyano, ou un groupe phényle éventuellement substitué, et leurs complexes de métaux.

2. Colorants monoazoïques répondant aux formules:

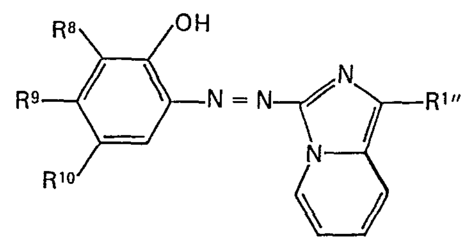

ou

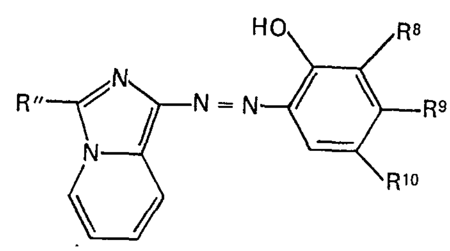

dans lesquelles

R″ et R1″ représentent chacun un groupe alkyle en $C_1$–$C_3$, un groupe phényle éventuellement substitué par un groupe alkyle en $C_1$ à $C_4$;

$R^8$ à $R^{10}$ représentent chacun H, Cl, $NO_2$, NC, un groupe sulfo, acylamino, sulfamoyle éventuellement substitué, et leurs complexes de métaux.

3. Complexes de Co, de Cu, de Ni, de Zn et de Mg des colorants des revendications 1 ou 2.

4. Matière pour impression ou enregistrement photographique en couleurs pour la préparation d'images colorées selon le procédé de transfert par diffusion de la couleur, matière qui contient, en relation de correspondance avec au moins une couche d'émulsion d'halogénure d'argent photosensible, un composé générateur de couleur ne diffusant pas et à partir duquel un colorant azoïque capable de diffusion, complexable par des ions de métaux, est libéré dans les conditions du développement alcalin en fonction du développement de la couche d'émulsion d'halogénure d'argent, matière caractérisée en ce que le colorant azoïque répond à la formule XIV suivante:

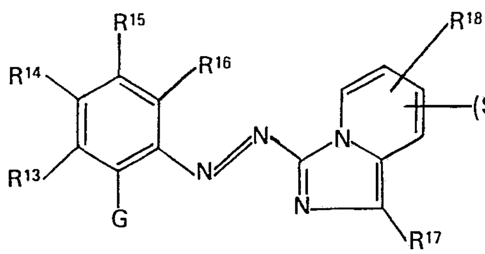

XIV,

dans laquelle

$R^{13}$, $R^{14}$, $R^{15}$ et $R^{16}$, identiques ou différents, représentent chacun -H, -F, -Cl, -Br, -CN, $-NO_2$, $-CF_3$, $-OCF_3$, $-SCF_3$, un groupe alkyle, alcoxy, alkylthio, acylamino, alkylsulfonyle, arylsulfonyle, -CO-X ou $-SO_2-Y$, ou bien deux radicaux voisins choisis dans l'ensemble des radicaux $R^{13}$ à $R^{16}$ forment ensemble un noyau benzénique condensé pouvant éventuellement porter d'autre substituants;

$R^{17}$ représente un atome d'hydrogène ou un substituant ayant un caractère de donneur d'électrons;

$R^{18}$ représente un atome d'hydrogène ou d'halogène ou un groupe alkyle;

G représente un groupe capable de former des chélates;

X représente un groupe -OH, alcoxy, un groupe amino éventuellement substitué par un groupe alkyle ou aryle, ou bien un groupe amino cyclique;

Y représente -H, -OH, un groupe amino éventuellement substitué par un groupe alkyle ou aryle, un groupe amino cyclique, ou bien un groupe de formule $-NH-SO_2-R^{19}$;

$R^{19}$ représente un groupe alkyle, aryle, un groupe amino éventuellement substitué deux fois par un groupe alkyle, ou bien un groupe amino cyclique;

n vaut 0 ou 1.

5. Matière d'enregistrement selon la revendication 4, caractérisée en ce que, dans la formule XIV, G représente -OH ou $-NH-SO_2-R^{20}$, où $R^{20}$ représente un groupe alkyle, aryle, un groupe amino éventuellement substitué deux fois par un groupe alkyle, ou bien un groupe amino cyclique, et $R^{17}$ représente un groupe alkyle, alcényle, aralkyle, cycloalkyle, aryle, alcoxy, aralcoxy, aroxy, alkylthio, arylthio, un groupe amino éventuellement substitué par un groupe alkyle, aryle ou acyle, ou bien un groupe amino cyclique.

6. Matière d'enregistrement selon la revendication 4, caractérisée en ce que l'un des radicaux $R^{13}$, $R^{14}$, $R^{15}$ et $R^{16}$ représente un groupe sulfamoyle ou sulfinate ou un groupe N-phénylsulfamoyle substitué par un groupe sulfamoyle ou sulfinate.

7. Image colorée obtenue par photographie, consistant en une couche de liant disposée sur un rapport de couche et contenant, en répartition destinée à la formation d'une image, un colorant bleu-vert pour image, image caractérisée en ce qu'elle comporte comme colorant pour image un complexe de cuivre ou de nickel d'un colorant azoïque répondant à l'une des formules suivantes:

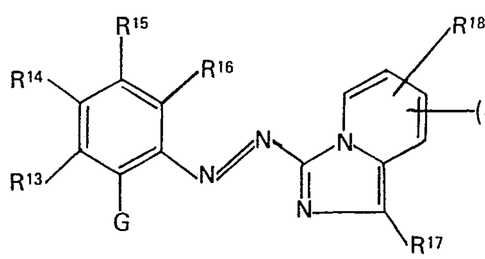

XIV,

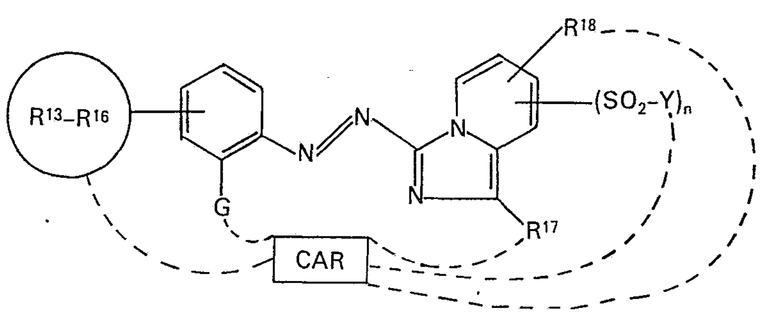

XV,

dans lesquelles

$R^{13}$, $R^{14}$, $R^{15}$ et $R^{16}$, identiques ou différents, représentent chacun -H, -F, -Cl, -Br, -CN, $-NO_2$, $-CF_3$, $-OCF_3$, $-SCF_3$, un groupe alkyle, alcoxy, alcylthio, acylamino, alkylsulfonyle, arylsulfonyle, -CO-X ou $-SO_2-Y$; ou bien deux radicaux voisins l'un de

l'autre et choisis dans l'ensemble des radicaux $R^{13}$ à $R^{16}$ forment ensemble un noyau benzénique condensé pouvant éventuellement porter d'autres substituants;
$R^{17}$ représente un atome d'hydrogène ou un substituant ayant un caractère de donneur d'électrons;
$R^{18}$ représente un atome d'hydrogène ou d'halogène ou un groupe alkyle;
G représente un groupe capable de former des chélates;
X représente -OH, un groupe alcoxy, un groupe amino éventuellement substitué par un groupe alkyle ou aryle, ou bien un groupe amino cyclique;
Y représente -H, -OH, un groupe amino éventuellement substitué par un groupe alkyle ou aryle, un groupe amino cyclique ou un groupe de formule $-NH-SO_2-R^{19}$;
$R^{19}$ représente un groupe alkyle, aryle, un groupe amino éventuellement substitué deux fois par un groupe alkyle, ou bien un groupe amino cyclique;
n vaut 0 ou 1;
CAR représente un radical support se scindant lors du développement de formation d'image et contenant au moins un groupe rendant non diffusible.

8. Image colorée selon la revendication 7, caractérisée en ce que, dans la formule XIV, G représente -OH ou $-NH-SO_2-R^{20}$, formule dans laquelle $R^{20}$ représente un groupe alkyle, aryle, un groupe amino éventuellement substitué deux fois par un groupe alkyle, ou bien un groupe amino cyclique, et en ce que $R^{17}$ représente un groupe alkyle, alcényle, aralkyle, cycloalkyle, aryle, alcoxy, aralcoxy, aroxy, alkylthio, arylthio, un groupe amino éventuellement substitué par un groupe alkyle, aryle ou acyle, ou bien un groupe amino cyclique.

## Claims

1. Monoazo dyes of the formulae

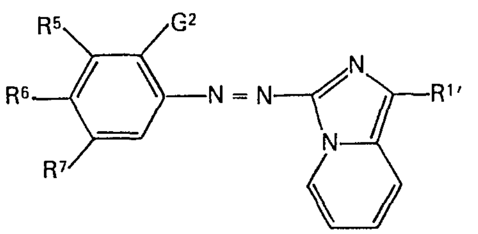

and

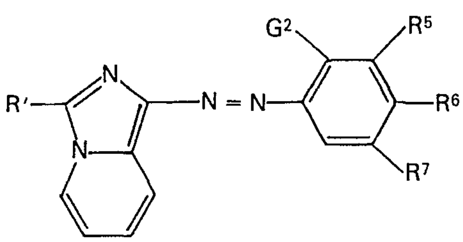

and metal complexes thereof,
wherein
$G^2$ denotes OH or COOH,
$R^5$ to $R^7$ denote H, F, Cl, Br, cyano, nitro, COOH, sulpho,
$CF_3$, acylamino, optionally substituted sulphamoyl or carbamoyl, or two adjacent radicals together denote a condensed benzene ring and
$R'$ and $R^{1'}$ denote H, $C_1$–$C_4$-alkyl, which is optionally substituted by halogen, alkoxy or cyano, or optionally substituted phenyl.

2. Monoazo dyes of the formulae

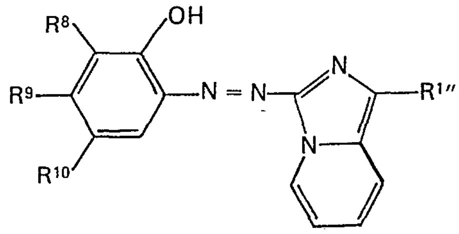

or

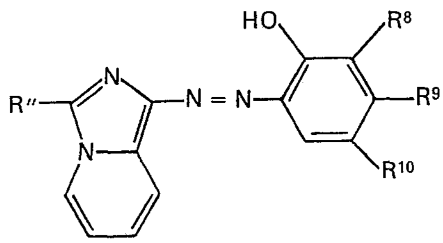

and metal complexes thereof,
wherein
$R''$ and $R^{1''}$ denote $C_1$–$C_3$-alkyl or phenyl which is optionally substituted by $C_1$–$C_4$-alkyl,
$R^8$ to $R^{10}$ denote H, Cl, $NO_2$, CN, sulpho, acylamino or optionally substituted sulphamoyl.

3. Co-, Cu-, Ni-, Zn- and Mg-complexes of the dyes of Claims 1 or 2.

4. Colour photographic recording material for the production of colour images by the dye diffusion transfer process, which contains a non-diffusing colour-providing compound associated to at least one light-sensitive silver halide emulsion layer, from which colour-providing compound a diffusible azo dye capable of forming a complex with metal ions is released under the conditions of alkaline development as a function of the development of the silver halide emulsion layer, characterised in that the azo dye corresponds to the following formula XIV:

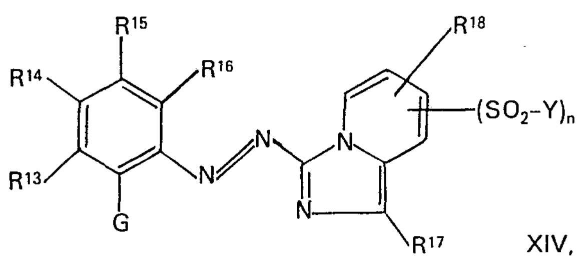

XIV,

wherein

$R^{13}$, $R^{14}$, $R^{15}$ and $R^{16}$ are identical or different and denote -H, -F, -Cl, -Br, -CN, $-NO_2$, $-CF_3$, $-OCF_3$, $-SCF_3$, alkyl, alkoxy, alkylthio, acylamino, alkylsulphonyl, arylsulphonyl, -CO-X or $-SO_2-Y$ or two adjacent radicals from the group of radicals $R^{13}$–$R^{16}$ together denote a condensed benzene ring which can optionally carry further substituents;

$R^{17}$ denotes hydrogen or a substituent having an electron donor character;

$R^{18}$ denotes hydrogen, halogen or alkyl;

G denotes a group capable of chelate formation;

X denotes -OH, alkoxy, an amino group which is optionally substituted by alkyl or aryl, or a cyclic amino group,

Y denotes -H, -OH, an amino group which is optionally substituted by alkyl or aryl, a cyclic amino group, or a group of the formula $-NH-SO_2-R^{19}$;

$R^{19}$ denotes alkyl, aryl, an amino group which is optionally disubstituted by alkyl, or a cyclic amino group; and n denotes 0 or 1.

5. Recording material according to Claim 4, characterised in that in formula XIV G represents -OH or $-NH-SO_2-R^{20}$, wherein $R^{20}$ denotes alkyl, aryl, an amino group which is optionally disubstituted by alkyl, or a cyclic amino group, and in that $R^{17}$ represents alkyl, alkenyl, aralkyl, cycloalkyl, aryl, alkoxy, aralkoxy, aroxy, alkylthio, arylthio, an amino groupe which is optionally substituted by alkyl, aryl or acyl, or a cyclic amino group.

6. Recording material according to Claim 4, characterised in that one of the radicals $R^{13}$, $R^{14}$, $R^{15}$ and $R^{16}$ represents a sulphamoyl or sulphinate group or an N-phenyl-sulphamoyl group which is substituted by a sulphamoyl or sulphinate group.

7. Photographically produced colour image, consisting of a binder layer arranged on a layer support and an imagewise distribution of a cyan image dye contained therein, characterised in that the image dye contained therein, is a copper or nickel complex of an azo dye of one of the following formulae:

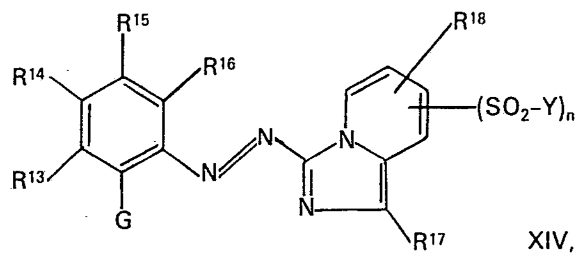

XIV,

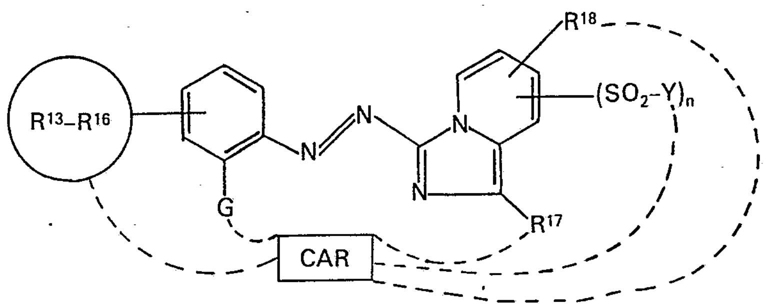

XV,

wherein

$R^{13}$, $R^{14}$, $R^{15}$ and $R^{16}$ are identical or different and denote -H, -F, -Cl, -Br, -CN, $-NO_2$, $-CF_3$, $-OCF_3$, $-SCF_3$, alkyl, alkoxy, alkylthio, acylamino, alkylsulphonyl, arylsulphonyl, -CO-X or $-SO_2-Y$; or two adjacent radicals from the group of radicals $R^{13}$–$R^{16}$ together denote a condensed benzene ring which can optionally carry further substituents;

$R^{17}$ denotes hydrogen or a substituent having an electron donor character;

$R^{18}$ denotes hydrogen, halogen or alkyl;

G denotes a group capable of chelate formation;

X denotes -OH, alkoxy, an amino group which is optionally substituted by alkyl or aryl, or a cyclic amino group,

Y denotes -H, -OH, an amino group which is optionally substituted by alkyl or aryl, a cyclic amino group, or a group of the formula $-NH-SO_2-R^{19}$;

$R^{19}$ denotes alkyl, aryl, an amino group which is optionally disubstituted by alkyl, or a cyclic amino group;

n denotes 0 or 1; and

CAR denotes a carrier radical which contains at least one group conferring diffusion resistance and is capable of being split off imagewise during development.

8. Colour image according to Claim 7, characterised in that in formula XIV G represents -OH or $-NH-SO_2R^{20}$, wherein $R^{20}$ denotes alkyl, aryl, an amino group which is optionally disubstituted by alkyl, or a cyclic amino group, and in that $R^{17}$ represents alkyl, alkenyl, aralkyl, cycloalkyl, aryl, alkoxy, aralkoxy, aroxy, alkylthio, arylthio, an amino group which is optionally substituted by alkyl, aryl or acyl, or a cyclic amino group.